# EUROPEAN PATENT SPECIFICATION

(11) **EP 4 375 853 B1**
(45) Date of publication and mention of the grant of the patent: **26.08.2026**
(21) Application number: 22845046.6
(22) Date of filing: 17.06.2022
(51) Int. Cl.: H04L 12/28

(54) **CONTROL METHOD FOR SMART HOME SYSTEM, AND SMART HOME SYSTEM**
STEUERUNGSVERFAHREN FÜR INTELLIGENTES HEIMSYSTEM UND INTELLIGENTES HEIMSYSTEM
PROCÉDÉ DE COMMANDE POUR SYSTÈME DOMESTIQUE INTELLIGENT, ET SYSTÈME DOMESTIQUE INTELLIGENT

(30) Priority: 22.07.2021 CN 202110831286
(43) Date of publication of application: 29.05.2024
(73) Proprietor: CHONGQING HAIER WASHING MACHINE CO., LTD., Chongqing, 400026 (CN); Haier Smart Home Co., Ltd., Qingdao, Shandong 266101 (CN)
(72) Inventor: SHI, Daixing, Qingdao, Shandong 266101 (CN); SUN, BeiBei, Qingdao, Shandong 266101 (CN); XU, Sheng, Qingdao, Shandong 266101 (CN); HUANG, Zhenxing, Qingdao, Shandong 266101 (CN)
(74) Representative: Patentwerk B.V.
(86) International application number: PCT/CN2022/099332
(87) International publication number: WO 2023/000880

(56) References cited:
- CN-A- 105 656 734
- CN-A- 108 594 683
- CN-A- 111 812 996
- US-A1- 2014 074 296
- US-A1- 2014 279 192
- US-A1- 2016 093 081
- US-A1- 2020 002 872
- US-A1- 2020 018 006

## Description

### TECHNICAL FIELD

The present disclosure relates to the technical field of smart homes, and specifically provides a control method for a smart home system, and the smart home system.

### BACKGROUND

A smart home, which takes a residence as a platform, connects various devices in the home together through an Internet of Things technology to achieve an intelligent living environment and build an efficient management system for residential facilities and family schedules, thereby improving the safety, convenience and comfort of home life.

In home life, with the improvement of living standards, people pay more and more attention to the management of personal appearances, including the demands for high-quality clothing matching styles. For example, different occasions require different dressing matching styles. Therefore, users have more and more rich types and styles of clothing, which may be matched in various combinations. However, in many cases, users are not very clear about how to match the clothing to achieve an optimal or better matching effect. Moreover, there are too many types and styles of clothing, and how to wash and care for different clothing to avoid damages to the clothing has also become a problem that troubles the users.

US2020002872A1 discloses a clothing treatment apparatus and method therefor that allows an optimal treatment course to be performed depending on clothing being put into a clothing treatment appliance. The clothing treatment apparatus according to one aspect of the present disclosure includes: a clothing treatment appliance configured to perform at least one of washing, drying, sterilizing, deodorizing, dust removing, or wrinkle removing for the clothing, an identifying unit configured to individually identify clothing information on each piece of clothing being put into the clothing treatment appliance, an analyzing unit configured to deduce one optimal course based on each recommended course registered to be associated with the clothing information individually identified by the identifying unit, and a control unit configured to control an operation of the clothing treatment appliance according to the optimal course deduced by the analyzing unit.

Therefore, there is a need in the art for a novel control method for a smart home system, and the smart home system to solve the above problems.

### SUMMARY

The present disclosure aims to solve the above technical problems, i.e., to solve the problem that an existing smart home system cannot reasonably match clothing and recommend a washing and care procedure.

The present invention is defined in independent claim 1 and in dependent claims 2-15. In a first aspect, the present disclosure provides a control method for a smart home system. The smart home system includes a household device and a server, and the household device is capable of communicating with the server. The control method includes the following steps: acquiring, by the household device, a current clothing image; sending, by the household device, the current clothing image to the server; acquiring, by the server, an ID account number of the household device which sends the current clothing image; determining, by the server, an identity of the household device which sends the current clothing image, according to the ID account number; determining, by the server, a target requirement according to the identity; and selectively recommending, by the server, a washing and care procedure or a clothing matching scheme on the basis of the target requirement and according to the current clothing image.

In a preferred technical solution of the above control method, the step of "determining, by the server, a target requirement according to the identity" specifically includes: determining the target requirement to be clothing washing and care in response to the ID account number of the household device being an ID account number of a first-class device; and the step of "selectively recommending, by the server, a washing and care procedure or a clothing matching scheme on the basis of the target requirement and according to the current clothing image" specifically includes: recommending, by the server, a washing and care procedure according to the current clothing image in response to the target requirement being the clothing washing and care.

In a preferred technical solution of the above control method, the step of "determining, by the server, a target requirement according to the identity" further includes: determining the target requirement to be a clothing matching suggestion in response to the ID account number of the household device being an ID account number of a second-class device; and the step of "selectively recommending, by the server, a washing and care procedure or a clothing matching scheme on the basis of the target requirement and according to the current clothing image" further includes: recommending, by the server, a clothing matching scheme according to the current clothing image in response to the target requirement being the clothing matching suggestion.

In a preferred technical solution of the above control method, the step of "determining, by the server, a target requirement according to the identity" further includes: acquiring, by the household device, a control instruction in response to the ID account number of the household device being an ID account number of a third-class device; and sending, by the household device, the control instruction to the server; and the step of "selectively recommending, by the server, a washing and care procedure or a clothing matching scheme on the basis of the target requirement and according to the current clothing image" further includes: determining, by the server, whether the content of the control instruction is a washing and care procedure recommendation; recommending, by the server, a washing and care procedure according to the current clothing image in response to the content of the control instruction being the washing and care procedure recommendation; and/or recommending, by the server, a clothing matching scheme according to the current clothing image in response to the content of the control instruction being a clothing matching scheme recommendation.

In a preferred technical solution of the above control method, the server has a clothing matching database and a clothing private database; and the step of "recommending, by the server, a clothing matching scheme according to the current clothing image" specifically includes: obtaining a first subject image of current clothing by preprocessing the current clothing image by the server; judging, by the server, whether a top and a bottom are both present in the first subject image; judging, by the server, whether the current clothing is matched reasonably according to the first subject image and the clothing matching database in response to a top and a bottom being both present in the first subject image; and/or recommending, by the server, a target matching scheme according to the first subject image, the clothing matching database and the clothing private database in response to a top or a bottom being present alone in the first subject image.

In a preferred technical solution of the above control method, the step of "judging, by the server, whether the current clothing is matched reasonably according to the first subject image and the clothing matching database" specifically includes: determining, by the server, a first fitness of the top and the bottom according to the first subject image; determining, by the server, second fitnesses of the top and the bottom according to the first subject image and the clothing matching database; determining, by the server, total fitnesses according to the first fitness and the second fitnesses; and judging, by the server, whether the current clothing is matched reasonably according to the total fitnesses.

In a preferred technical solution of the above control method, the step of "determining, by the server, a first fitness of the top and the bottom according to the first subject image" specifically includes: determining, by the server, a top color and a bottom color according to the first subject image; judging whether the top color and the bottom color meet a preset rule; and determining the first fitness of the top color and the bottom color according to the judgment result.

In a preferred technical solution of the above control method, the step of "determining, by the server, second fitnesses of the top and the bottom according to the first subject image and the clothing matching database" specifically includes: determining, by the server, a current top image and a current bottom image according to the first subject image; calculating, by the server, a first similarity between the current top image and each standard top image stored in the clothing matching database, or between the current bottom image and each standard bottom image stored in the clothing matching database; determining, by the server, a target bottom image from the clothing matching database respectively according to each of the first similarities, or determining, by the server, a target top image from the clothing matching database respectively according to each of the first similarities; calculating, by the server, a second similarity between each of the target bottom images and the current bottom image, or between each of the target top images and the current top image; and calculating, by the server, the second fitnesses according to each of the second similarities and the corresponding first similarity.

In a preferred technical solution of the above control method, the second fitnesses are calculated according to the following method: *F₂*=*D₁*×*D₂,* where *F₂* is the second fitness; *D₁* is the first similarity; and *D₂* is the second similarity.

In a preferred technical solution of the above control method, the step of "determining, by the server, total fitnesses according to the first fitness and the second fitnesses" specifically includes: calculating, by the server, the total fitnesses according to the first fitness and each of the second fitnesses, respectively.

In a preferred technical solution of the above control method, the total fitnesses are calculated according to the following method: *F₀*=*F₁*×*k₁*+*F₂*×*k₂,* where *F₀* is the total fitness; *F₁* is the first fitness; *F₂* is the second fitness; *k₁* is a first weight value; and *k₂* is a second weight value.

In a preferred technical solution of the above control method, the step of "determining, by the server, whether the current clothing is matched reasonably according to the total fitnesses" specifically includes: determining, by the server, the maximum fitness by comparing all the total fitnesses; judging whether the maximum fitness is greater than a preset fitness; judging that the current clothing is matched reasonably in response to the maximum fitness being greater than the preset fitness, and sending, by the server, the judgment result to the household device, such that the household device displays "the current clothing matched reasonably"; and/or judging that the current clothing is not matched reasonably in response to the maximum fitness being less than or equal to the preset fitness, and recommending, by the server, a target matching scheme according to the first subject image, the clothing matching database and the clothing private database.

In a preferred technical solution of the above control method, the step of "recommending, by the server, a target matching scheme according to the first subject image, the clothing matching database and the clothing private database" specifically includes: matching, by the server, a plurality of alternative clothing matching schemes from the clothing matching database according to a color of the current clothing and a preset method; calculating, by the server, a third similarity between an alternative clothing image corresponding to each of the alternative clothing matching schemes and a self-owned clothing image of each user that is stored in the clothing private database; judging whether the third similarity is greater than a first preset similarity; determining, by the server, the alternative clothing matching scheme corresponding to the alternative clothing image as the target matching scheme in response to the third similarity being greater than the first preset similarity, and sending the target matching scheme to the household device, such that the household device displays the target matching scheme; and/or not determining the alternative clothing matching scheme corresponding to the alternative clothing image as the target matching scheme in response to the third similarity being less than or equal to the first preset similarity.

In a preferred technical solution of the above control method, the server further has a clothing image database; and the step of "recommending, by the server, a washing and care procedure according to the current clothing image" specifically includes: obtaining a second subject image of the current clothing by preprocessing the current clothing image by the server; determining, by the server, attribute information according to the second subject image; comparing, by the server, the second subject image with historical clothing images stored in the clothing image database; determining, by the server, whether the current clothing is one of historical clothing according to the comparison result; determining, by the server, a washing and care procedure according to the attribute information and historical washing data of the current clothing in response to the current clothing being one of historical washed clothing, and sending the washing and care procedure to the household device; and/or determining, by the server, a washing and care procedure according to the attribute information in response to the current clothing being not one of the historical washed clothing, and sending the washing and care procedure to the household device.

In a preferred technical solution of the above control method, the step of "comparing, by the server, the second subject image with historical clothing images stored in the clothing image database" specifically includes: calculating, by the server, a fourth similarity between the second subject image and each of the historical clothing images; and the step of "judging, by the server, whether the current clothing is one of historical clothing according to the comparison result" specifically includes: judging whether the fourth similarity is greater than a second preset similarity; judging that the current clothing is one of the historical clothing in response to the fourth similarity being greater than the second preset similarity; and/or judging that the current clothing is not one of the historical clothing in response to the fourth similarity being less than or equal to the second preset similarity.

In a second aspect, the present disclosure provides a control method for a smart home system. The smart home system includes a household device and a server, and the household device is capable of communicating with the server. The control method includes the following steps: receiving, by the server, the current clothing image from the household device after the household device acquires a current clothing image; acquiring, by the server, an ID account number of the household device which sends the current clothing image; determining, by the server, an identity of the household device which sends the current clothing image, according to the ID account number; determining, by the server, a target requirement according to the identity; and selectively recommending, by the server, a washing and care procedure or a clothing matching scheme on the basis of the target requirement and according to the current clothing image.

In a third aspect, the present disclosure provides a control method for a smart home system. The smart home system includes a household device and a server, and the household device is capable of communicating with the server. The control method includes the following steps: acquiring, by the household device, a current clothing image; and sending, by the household device, the current clothing image to the server, such that the server acquires, after receiving the current clothing image, an ID account number of the household device which sends the current clothing image, and the server determines an identity of the household device which sends the current clothing image, according to the ID account number; and that the server determines a target requirement according to the identity, and the server selectively recommends a washing and care procedure or a clothing matching scheme on the basis of the target requirement and according to the current clothing image.

In a fourth aspect, the present disclosure provides a smart home system. The smart home system includes a household device and a server, and the household device is capable of communicating with the server. The household device is configured to acquire a current clothing image; the household device is configured to send the current clothing image to the server; the server is configured to acquire an ID account number of the household device which sends the current clothing image; the server is configured to determine an identity of the household device which sends the current clothing image, according to the ID account number; the server is configured to determine a target requirement according to the identity; and the server is capable of selectively recommending a washing and care procedure or a clothing matching scheme on the basis of the target requirement and according to the current clothing image.

In a preferred technical solution of the above control method of the present disclosure, the household device acquires a current clothing image; the household device sends the current clothing image to the server; the server acquires an ID account number of the household device which sends the current clothing image; the server determines an identity of the household device which sends the current clothing image, according to the ID account number; the server determines a target requirement according to the identity; and the server selectively recommends a washing and care procedure or a clothing matching scheme on the basis of the target requirement and according to the current clothing image.

According to the present disclosure, a target requirement of a user can be determined accurately according to the identity of the household device which sends the current clothing image to the server; and the server selectively recommends a washing and care procedure or a clothing matching scheme on the basis of the target requirement of the user and according to the current clothing image, which can recommend a reasonable and accurate washing and care procedure to clean the clothing, prevent the clothing from being damaged and improve the washing and care effect of the clothing, and can recommend a reasonable clothing matching scheme for the user to achieve an optimal or better matching effect and better meet different user needs, thereby improving the user experience.

Further, the server obtains a first subject image of the current clothing by preprocessing the current clothing image in the case that the target requirement of the user is determined to be a clothing matching suggestion, and the influences of factors such as a background environment are eliminated. The server judges whether a top and a bottom are both present in the first subject image. It means that the user has matched a set of clothing in the case that a top and a bottom are both present in the first subject image, but whether the current matching is reasonable is not determined. Accordingly, the server judges whether the current clothing is matched reasonably according to the first subject image and the clothing matching database, such that the user can be clear about the current matching result, thereby improving the user experiment. It means that the user wants to wear the top or bottom in the case that a top or a bottom is present alone in the first subject image, but how to match the clothing to achieve an optimal or better matching effect cannot be determined. Accordingly, the server recommends a target matching scheme according to the first subject image, the clothing matching database and the clothing private database to provide a better clothing matching scheme for the user, thereby meeting the needs of the user.

Further, the server obtains a second subject image of the current clothing by preprocessing the current clothing image in the case that the target requirement of the user is clothing washing and care, and the influences of factors such as a background environment are eliminated. The server can accurately determine attribute information of the current clothing according to the second subject image. The server compares the second subject image with historical clothing images stored in the clothing image database. The server determines whether the current clothing is one of historical clothing according to the comparison result, such that whether the current clothing has been washed can be determined accurately. It means that this clothing has been washed in response to the current clothing being one of the historical washed clothing. In order to accurately determine a washing and care procedure, the server determines the washing and care procedure according to the attribute information and historical washing data of the current clothing, which not only considers historical washing informations of the clothing, but also considers attributes of the clothing, so that the recommended washing and care procedure is more reasonable and accurate. It means that this clothing has not been washed in response to the current clothing being not one of the historical washed clothing. In order to accurately determine a washing and care procedure, the server determines the washing and care procedure according to the attribute information, so that the recommended washing and care procedure is more reasonable and accurate. In addition, the washing and care procedure is sent to a washing machine after determined, such that the washing machine can wash the clothing more cleanly and thoroughly based on the recommended washing and care procedure, which can prevent damages to the clothing more effectively, improve the washing and care effect of the clothing and better meet the user's needs, thereby improving the user experience.

### BRIEF DESCRIPTION OF DRAWINGS

The control method of the present disclosure is described below by reference to the accompanying drawings and in conjunction with a washing machine. In the accompanying drawings:
FIG. 1 is a structural diagram of a smart home system according to the present disclosure;
FIG. 2 is a main flowchart of a control method according to the present disclosure;
FIG. 3 is a flowchart of a control method for determining a target requirement and selectively recommending a washing and care procedure or a clothing matching scheme based on the target requirement according to the present disclosure;
FIG. 4 is a flowchart of a control method for recommending a clothing matching scheme according to the present disclosure;
FIG. 5 is a flowchart I of a control method for determining whether the current clothing is matched reasonably according to the present disclosure;
FIG. 6 is a flowchart II of a control method for determining whether the current clothing is matched reasonably according to the present disclosure;
FIG. 7 is a flowchart of a control method for recommending a target matching scheme according to the present disclosure;
FIG. 8 is a flowchart of a control method for recommending a washing and care procedure according to the present disclosure;
FIG. 9 is a flowchart of a control method for determining whether the current clothing is one of historical clothing according to the present disclosure;
FIG. 10 is a logical diagram I of a control method according to the present disclosure; and
FIG. 11 is a logical diagram II of a control method according to the present disclosure.

List of reference symbols:
1-household device; 11-first-class device; 12-second-class device; 13-third-class device; and 2-server.

### DETAILED DESCRIPTION

Preferred embodiments of the present disclosure are described below by reference to the accompanying drawings. Those skilled in the art should understand that these embodiments are only used to explain the technical principles of the present disclosure and are not intended to limit the scope of protection of the prevent invention. For example, although the present application is described in combination with a washing machine, a care machine and a dressing mirror, the technical solutions of the present disclosure are not limited thereto. The smart home system and the control method may obviously also be applied to a washer-dryer, a dryer, a smart wardrobe and other household devices, and such change does not deviate from the principle and scope of the present disclosure.

It should be noted that, in the description of the present disclosure, the terms "first", "second", "third", "fourth", "fifth", "sixth", "seventh" and "eighth" are used for descriptive purposes only and are not to be construed as indicating or implying relative importance.

In addition, it should also be noted that, in the description of the present disclosure, unless otherwise definitely specified and limited, the terms "connected to/with" and "provided with" are to be understood in a broad sense, e.g., as a fixed connection, a detachable connection or an integrated connection; a mechanical connection or an electric connection; a direct connection, an indirect connection through an intermediation, or a communication of inner parts of two elements. Those skilled in the art may understand the specific meanings of the above terms in the present disclosure in accordance with specific circumstances.

Based on the technical problems mentioned in the background art, the present disclosure provides a control method for a smart home system, and the smart home system, which aim to determine a target requirement of a user accurately according to an identity of a household device which sends a current clothing image to a server. The server selectively recommends a washing and care procedure or a clothing matching scheme on the basis of the target requirement of the user and according to the current clothing image, which can recommend a reasonable and accurate washing and care procedure to clean the clothing, prevent the clothing from being damaged and improve a washing and care effect of the clothing, and can recommend a reasonable clothing matching scheme for the user to achieve an optimal or better matching effect and better meet different user needs, thereby improving the user experience.

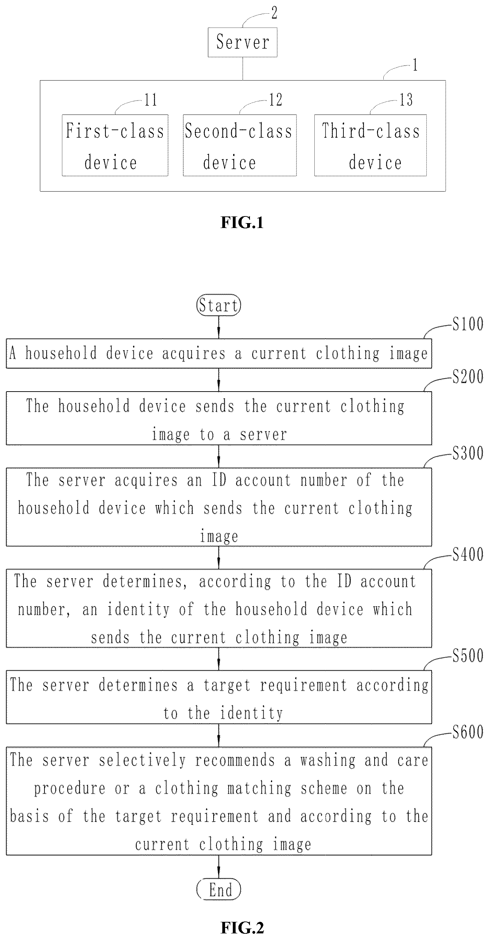

Referring to FIG. 1 first, a smart home system according to the present disclosure is described. FIG. 1 is a structural diagram of the smart home system according to the present disclosure.

As shown in FIG. 1, the smart home system of the present disclosure includes a household device 1 and a server 2, the household device 1 being capable of communicating with the server 2. The household device 1 is configured to acquire a current clothing image. The household device 1 is configured to send the current clothing image to the server 2. The server 2 is configured to acquire an ID account number of the household device 1 which sends the current clothing image. The server 2 is configured to determine an identity of the household device 1 which sends the current clothing image, according to the ID account number. The server 2 is configured to determine a target requirement according to the identity. The server 2 is capable of selectively recommending a washing and care procedure or a clothing matching scheme on the basis of the target requirement and according to the current clothing image.

Preferably, the household device 1 is provided with an image acquisition module which is configured to shoot the current clothing image. The image acquisition module may be, but is not limited to, a webcam, a camera, etc.

Further, the household device 1 may belong to any one of three different classes. The first-class device 11 includes a washing machine, a dry washer, a washer-dryer, a shoe washing machine, etc., which can be used by a user to wash and care for clothing. The second-class device 12 includes a dressing mirror, a smart wardrobe, etc., which can be used by the user to match the clothing. The third-class device 13 includes a clothing care machine on which a dressing mirror is disposed, etc., which can be used by the user to wash and care for clothing, and also to match the clothing. Certainly, the division of the household device 1 is not limited to the ways listed above, and the household device 1 may also belong to any one of four different classes. The four-class device includes an ironing machine, etc., and the ironing machine is capable of ironing the clothing alone. Those skilled in the art can flexibly adjust and set the division of the household device 1 according to actual usage needs, etc.

Preferably, the server 2 is provided with a clothing matching database, a clothing private database and a clothing image database. The clothing matching database stores a variety of clothing images of different styles, as well as different styles of matching schemes. The clothing private database stores self-owned clothing images of the user. The clothing image database stores historical clothing images, historical clothing attributes, and historical washing data. The historical clothing attributes include colors, materials, and types of clothing. The historical washing data includes historical washing times and historical color depths. The clothing image database is also capable of storing current clothing images, as well as a color, material and type of the current clothing.

The server 2 may be, but is not limited to, a cloud server 2 and a backend server 2.

Preferably, the household device 1 is capable of communicating with the server 2 through a wide area network, a local area network, WIFI, "WIFl+router connected to the Internet", Bluetooth, ZIGBEE, NFC, 3G/4G/5G, etc.

Hereinafter referring to FIG. 2, a control method for a smart home system according to the present disclosure is described. FIG. 2 is a flowchart of the control method according to the present disclosure.

As shown in FIG. 2, the control method according to the present disclosure includes the following steps:
S100: acquiring, by a household device, a current clothing image;
S200: sending, by the household device, the current clothing image to a server;
S300: acquiring, by the server, an ID account number of the household device which sends the current clothing image;
S400: determining, by the server, an identity of the household device which sends the current clothing image, according to the ID account number;
S500: determining, by the server, a target requirement according to the identity; and
S600: selectively recommending, by the server, a washing and care procedure or a clothing matching scheme on the basis of the target requirement and according to the current clothing image.

In S100, the household device shoots the current clothing image through an image acquisition module such as a webcam and a camera.

It should be noted that in the above process, the execution sequence and mode of S200 and S300 are not limited to the sequence and mode listed above. S300 may be executed first, followed by S200; or S200 and S300 may be executed simultaneously. Those skilled in the art may flexibly adjust and set the execution sequence of S200 and S300, which may not be limited in the present disclosure.

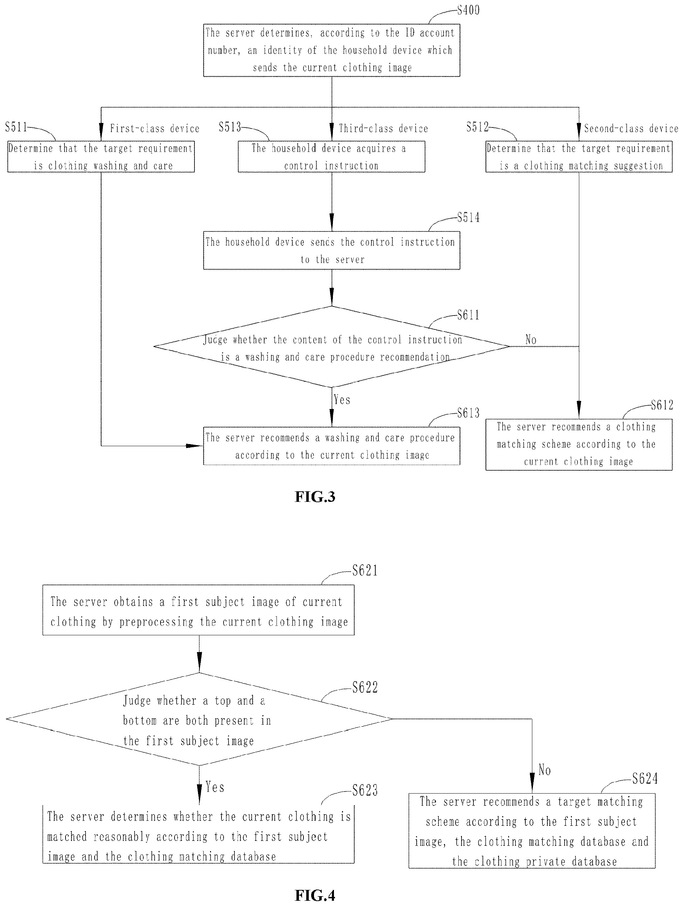

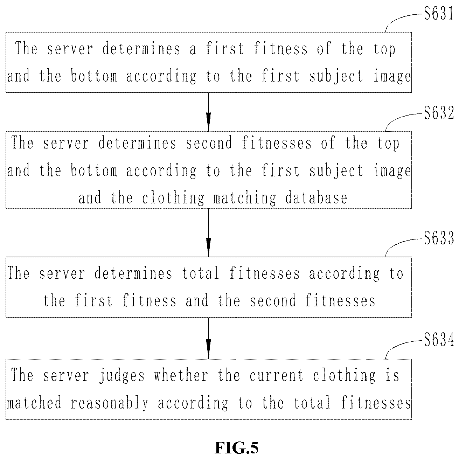

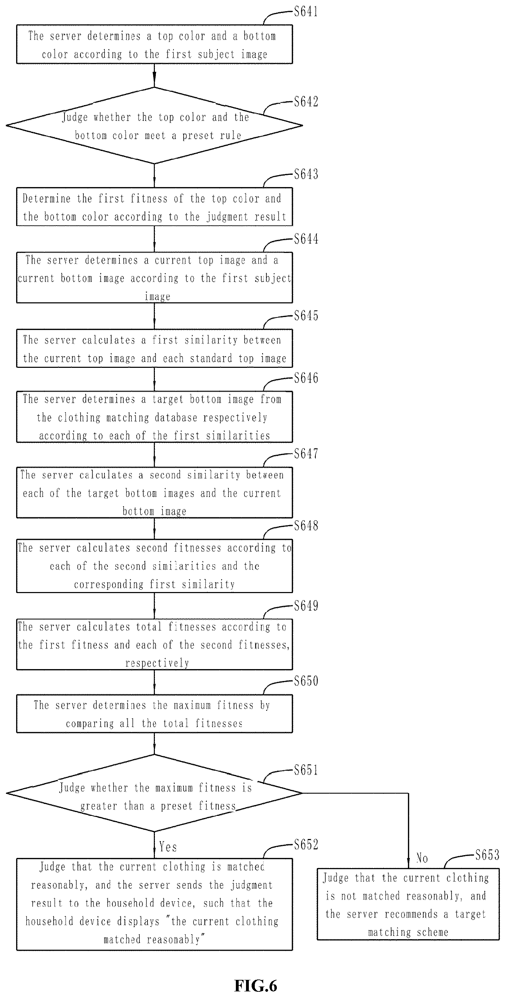

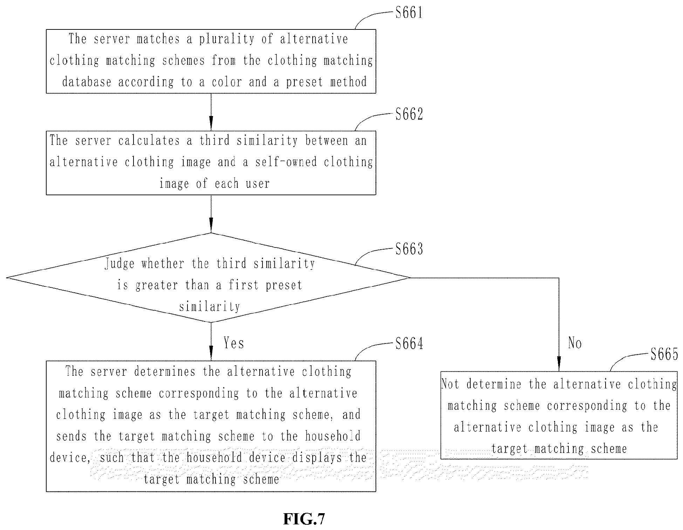

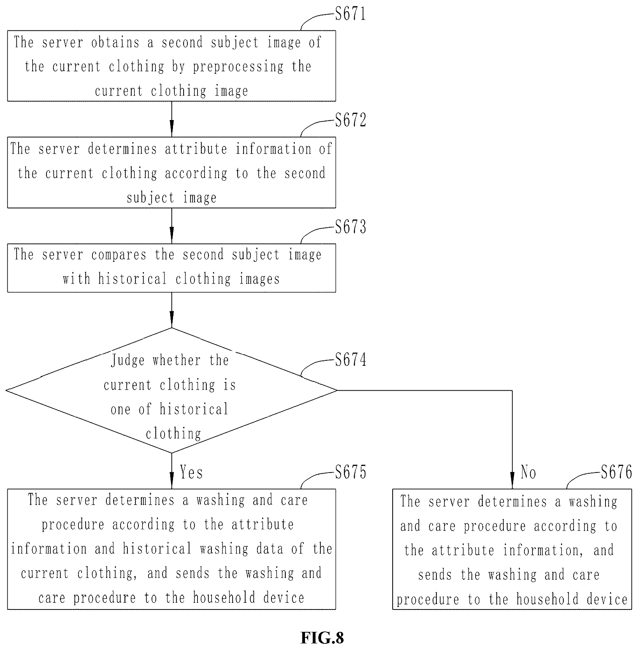

Hereinafter referring to FIG. 3 to FIG. 8, a control method for determining a target requirement and selectively recommending a washing and care procedure or a clothing matching scheme based on the target requirement according to the present disclosure is described. FIG. 3 is a flowchart of a control method for determining a target requirement and selectively recommending a washing and care procedure or a clothing matching scheme based on the target requirement according to the present disclosure; FIG. 4 is a flowchart of a control method for recommending a clothing matching scheme according to the present disclosure; FIG. 5 is a flowchart of a control method for determining whether the current clothing is matched reasonably according to the present disclosure; FIG. 6 is a flowchart of a control method for recommending a target matching scheme according to the present disclosure; FIG. 7 is a flowchart of a control method for recommending a washing and care procedure according to the present disclosure; and FIG. 8 is a flowchart of a control method for determining whether the current clothing is one of historical clothing according to the present disclosure.

As shown in FIG. 3, in S500, the step of "determining, by the server, a target requirement according to the identity" specifically includes:
S511: determining the target requirement to be clothing washing and care if the ID account number of the household device is an ID account number of a first-class device;
S512: determining the target requirement to be a clothing matching suggestion if the ID account number of the household device is an ID account number of a second-class device;
S513: acquiring, by the household device, a control instruction if the ID account number of the household device is an ID account number of a third-class device; and
S514: sending, by the household device, the control instruction to the server.

In S511, the first-class device is a device, e.g., a washing machine that can be used to wash and care clothing if the ID account number of the household device is the ID account number of the first-class device, and it may be considered that the user wants to wash clothing. Accordingly, it can be determined that the target requirement is clothing washing and care.

In S512, the second-class device is a device, e.g., a dressing mirror that can be used by the user to match the clothing if the ID account number of the household device is the ID account number of the second-class device, and it may be considered that the user wants to match the clothing. Accordingly, it can be determined that the target requirement is a clothing matching suggestion.

In S513 and S514, the third-class device is a device, e.g., a care machine that can be used by the user to wash and care clothing and also match the clothing if the ID account number of the household device is the ID account number of the third-class device. In order to determine the user's requirements, a control instruction is acquired from the user and sent to the server, so that the server determines a target requirement according to the content of the control instruction.

Further, a voice control instruction may be acquired from the user; or a control instruction that is inputted by the user through a control terminal of the care machine is acquired.

Continued to FIG. 3, in S600, the step of "selectively recommending, by the server, a washing and care procedure or a clothing matching scheme on the basis of the target requirement and according to the current clothing image" specifically includes:
performing S612 if the target requirement is a clothing matching suggestion;
performing S613 if the target requirement is clothing washing and care; and
performing S611 if the server receives the control instruction;
S611: judging, by the server, whether the content of the control instruction is a washing and care procedure recommendation; if not, performing S612; and if so, performing S613;
S612: recommending, by the server, a clothing matching scheme according to the current clothing image; and
S613: recommending, by the server, a washing and care procedure according to the current clothing image.

In S612, it means that the user wants to match the clothing if the target requirement is the clothing matching suggestion or the content of the control instruction is a clothing matching scheme recommendation. In order to meet the use requirements of the user, the server recommends a clothing matching scheme according to the current clothing image.

In S613, it means that the user wants to wash the clothing if the target requirement is clothing washing and care or the content of the control instruction is a washing and care procedure recommendation. In order to meet the use requirements of the user, the server recommends a clothing matching scheme according to the current clothing image.

It should be noted that, in the above process, S612 and S613 are not performed successively but in parallel, and are merely related to the target requirement or the content of the control instruction. Corresponding steps can be executed according to different target requirements and the content of the control instruction.

Next referring to FIG. 4, the server has a clothing matching database and a clothing private database. An object detection model is pre-stored in the server. In S612, the step of "recommending, by the server, a clothing matching scheme according to the current clothing image" specifically includes:
S621: obtaining a first subject image of current clothing by preprocessing the current clothing image by the server;
S622: judging, by the server, whether a top and a bottom are both present in the first subject image; if so, performing S623; and if not, performing S624;
S623: judging, by the server, whether the current clothing is matched reasonably according to the first subject image and the clothing matching database; and
S624: recommending, by the server, a target matching scheme according to the first subject image, the clothing matching database and the clothing private database.

In S621, the server calls the object detection model to preprocess the current clothing image to obtain a subject image of the current clothing. Taking a FCOS algorithm as an example, the object detection model identifies the current clothing image using the FCOS algorithm to identify the clothing in the current clothing image and a position of the clothing in the image, eliminates the background of the current clothing image according to the position to obtain a first subject image, stores the first subject image in the clothing private database as a self-owned clothing image of the user, and calls the first subject image directly in the need of matching the clothing again.

Certainly, the object detection model may also preprocess the current clothing image using a Faster R-CNN algorithm, a SPPNet algorithm, an SSD algorithm, a YOLO algorithm, etc. to obtain the first subject image. Regardless of any algorithm adopted by the object detection model, the specific method of preprocessing the current clothing image corresponding to any algorithm shall not constitute any limitation to the present disclosure.

In S623, it means that the user has matched a set of clothing if a top and a bottom are both present in the first subject image, but whether the current matching is reasonable is not determined. Accordingly, the server judges whether the current clothing is matched reasonably according to the first subject image and the clothing matching database, so that the user can be clear about a result of the current matching, thereby improving the user experience.

In S624, it means that the user wants to wear this top or bottom if a top or a bottom is present alone in the first subject image, but how to match the clothing to achieve an optimal or better matching effect cannot be determined. Accordingly, the server recommends a target matching scheme according to the first subject image, the clothing matching database and the clothing private database, and provides the user with a better clothing matching scheme, so as to meet the user's needs.

It should be noted that, in the above process, S623 and S624 are not performed successively but in parallel, and are merely related to a judgment result indicating whether a top and a bottom are both present in the first subject image. Corresponding steps can be executed according to different judgment results.

Next referring to FIG. 5, a deep learning model is pre-stored in the server. In S623, the step of "determining, by the server, whether the current clothing is matched reasonably according to the first subject image and the clothing matching database" specifically includes:
S631: determining, by the server, a first fitness of the top and the bottom according to the first subject image;
S632: determining, by the server, second fitnesses of the top and the bottom according to the first subject image and the clothing matching database;
S633: determining, by the server, total fitnesses according to the first fitness and the second fitnesses; and
S634: judging, by the server, whether the current clothing is matched reasonably according to the total fitnesses.

As shown in FIG. 6, in S631, the step of "determining, by the server, a first fitness of the top and the bottom according to the first subject image" specifically includes:
S641: determining, by the server, a top color and a bottom color according to the first subject image;
S642: judging whether the top color and the bottom color meet a preset rule; and
S643: determining the first fitness of the top color and the bottom color according to the judgment result.

In S641, the server calls the object detection model to identify the first subject image, so as to identify a top color and a bottom color of the current clothing. The object detection model may identify the first subject image using a FCOS algorithm, a Faster R-CNN algorithm, a SPPNet algorithm, an SSD algorithm, a YOLO algorithm, etc., so as to identify the top color and the bottom color of the current clothing. Regardless of any algorithm adopted by the object detection model, the specific method of identifying the first subject image corresponding to any algorithm shall not constitute any limitation to the present disclosure.

In S642, colors of the clothing are divided into cool, warm and intermediate colors. The cool colors include cyan, blue, purple, green, gray and other cool colors. The warm colors include red, orange, yellow and other warm colors. The intermediate colors include black and white. Correspondingly, the preset rules are that the cool colors are matched with the cool colors, the warm colors are matched with the warm colors, and the intermediate colors can be matched with the cool colors, the warm colors and the intermediate colors. Further, the color fitness is 1 in the event of matching according to the above preset rules; and the color fitness is 0.5 in the event of not matching according to the above preset rules. Of course, the color fitnesses listed above are only illustrative, but not restrictive. Those skilled in the art may flexibly adjust and set the color fitness according to actual matching needs.

In S643, it is judged that the first fitness of the top color and the bottom color is 1 in the event of matching according to the above preset rules, e.g., the top is white and the bottom is blue, which accords with the matching rule that the intermediate colors are matched with the cool colors; and it is judged that the first fitness of the top color and the bottom color is 0.5 in the event of matching according to rules other than the above preset rules, e.g., the top is cyan and the bottom is yellow, which does not accord with any of the matching rules listed above.

Continued to FIG. 6, the matching is further explained by taking the top as a reference. In S632, the step of "the server determining second fitnesses of the top and the bottom according to the first subject image and the clothing matching database" specifically includes:
S644: determining, by the server, a current top image and a current bottom image according to the first subject image;
S645: calculating, by the server, a first similarity between the current top image and each standard top image stored in the clothing matching database, the first similarity being expressed by a first cosine distance or a first Euclidean distance;
S646: determining, by the server, a target bottom image from the clothing matching database respectively according to each of the first similarities;
S647: calculating, by the server, a second similarity between each of the target bottom images and the current bottom image, the second similarity being expressed by a second cosine distance or a second Euclidean distance; and
S648: calculating, by the server, the second fitnesses according to each of the second similarities and the corresponding first similarity.

In S644, the server calls the object detection model to identify the first subject image, so as to identify the current top image and the current bottom image of the current clothing. The object detection model may identify the first subject image using a FCOS algorithm, a Faster R-CNN algorithm, a SPPNet algorithm, an SSD algorithm, a YOLO algorithm, etc., so as to identify the current top image and the current bottom image. Regardless of any algorithm adopted by the object detection model, the specific method of identifying the first subject image corresponding to any algorithm shall not constitute any limitation to the present disclosure.

In S645, assuming that three standard top images are stored in the clothing matching database, the server calls the deep learning model to extract a first vector matrix of the current top image and second vector matrices of the three standard top images, and calculates a first similarity between the extracted first vector matrix and each of the three second vector matrices. The first cosine distance is used to represent the first similarity. For example, the first cosine distances between the first vector matrix and the three second vector matrices are 0.9, 0.8, and 0.3, respectively. The deep learning model may calculate the first similarity between the current top image and the standard top images by using a ResNet101 algorithm, a CNN algorithm, a HRNet algorithm, a DeeplabV3+ algorithm, a ResNeXt algorithm, etc. Regardless of any algorithm adopted by the deep learning model, the specific method corresponding to any algorithm for calculating the first similarity between the current top image and the standard top images shall not constitute any limitation on the present disclosure.

In S646, the server judges whether the first similarity is greater than a set similarity. The set similarity is expressed by a set cosine distance, or a set Euclidean distance. The target bottom image is determined according to the standard top image corresponding to this first cosine distance if the first similarity is greater than the set similarity. The target bottom image is not determined according to the first cosine distance if the first similarity is less than or equal to the set similarity.

For example, the cosine distance is set to be 0.7, and the first cosine distances calculated in S645 are 0.9, 0.8, and 0.3, respectively. 0.9, 0.8, and 0.3 are compared with 0.7, respectively. 0.9 is greater than 0.7, and 0.8 is greater than 0.7, both of which are greater than the set similarity, indicating that the similarity between each of the standard top images corresponding to the first cosine distances of 0.9 and 0.8 and the current top image is extremely high. Accordingly, the target bottom image can be determined according to the standard top images corresponding to the first cosine distances of 0.9 and 0.8, respectively. Since the clothing matching database stores different styles of matching schemes, the target bottom images which are matched with the standard top images can be determined according to the standard top images through the pre-stored matching schemes, that is, two target bottom images are determined.

Further, 0.3 is less than 0.7, which is less than the set similarity, indicating that the similarity between the standard top image corresponding to the first cosine distance of 0.3 and the current top image is extremely low, so that the target bottom image is not determined according to the first cosine distance of 0.3.

In S647, as two target bottom images are determined in S646, the server calls the deep learning model to extract a third vector matrix of the current bottom image and fourth vector matrices of two target lower garments images, and calculates a second similarity between the extracted third vector matrix and each of the two fourth vector matrices. Second cosine distances are used to represent the second similarities. For example, the second cosine distances between the third vector matrix and the two fourth vector matrices are 0.8 and 0.6, respectively.

In S648, the server calculates a product of each second similarity and the corresponding first similarity respectively and takes the products as the second fitnesses, see Formula (1) for details: ${F}_{2} = {D}_{1} \times {D}_{2}$ in the Formula (1), *F₂* is the second fitness; *D₁* is the first similarity; and *D₂* is the second similarity.

For example, the second cosine distances between the third vector matrix and the two fourth vector matrices calculated in S647 are 0.8 and 0.6, respectively, and the corresponding first cosine distances are 0.9 and 0.8, respectively. The second fitnesses calculated according to Formula (1) is 0.72 and 0.48, respectively, that is, *F₂₁*=0.8×0.9=0.72, and *F₂₂*=0.6×0.8=0.48.

Or, in an alternative embodiment, the matching is performed by taking a bottom as a reference, and accordingly, the execution mode of S645 to S648 needs to be adjusted. Some of the methods that need to be adjusted are as follows:
the server calculates a first similarity between the current bottom image and each standard bottom image stored in the clothing matching database, the first similarity being expressed by a first cosine distance, or a first Euclidean distance;
the server determines a target top image according to each first similarity respectively; and
the server calculates a second similarity between each target top image and the current top image, the second similarity being expressed by a second cosine distance, or a second Euclidean distance.

The specific execution mode of the above steps may refer to the execution mode of S645 to S648, and will not be repeated herein.

Continued to FIG. 6, in S633, the step of "determining, by the server, total fitnesses according to the first fitnesses and the second fitnesses" specifically includes:
S649: calculating, by the server, total fitnesses according to the first fitnesses and each of the second fitnesses, respectively.

In S649, the server calculates the total fitnesses according to the following method: ${F}_{0} = {F}_{1} \times {k}_{1} + {F}_{2} \times {k}_{2}$ in the Formula (2), *F₀* is the total fitness; *F₁* is the first fitness; *F₂* is the second fitness; *k₁* is a first weight value; and *k₂* is a second weight value.

For example, *k₁* is 0.5 and *k₂* is 0.5, the first fitness of the top color and the bottom color is judged to be 1 in S643, the second fitnesses are calculated to be 0.72 and 0.48 in S648, respectively, and the total fitnesses calculated according to Formula (2) are 0.86 and 0.74, respectively, i.e., *F₀₁*=1×0.5+0.72×0.5=0.86, and *F₀₂*=1×0.5+0.48×0.5=0.74.

For another example, *k₁* is 0.5 and *k₂* is 0.5, the first fitness of the top color and the bottom color is judged to be 0.5 in S643, the second fitnesses are calculated to be 0.72 and 0.48 in S648, respectively, and the total fitnesses calculated according to Formula (2) are 0.61 and 0.49, respectively, i.e., *F₀₃*=0.5×0.5+0.72×0.5=0.61, and *F₀₄*=0.5×0.5+0.48×0.5=0.49.

Continued to FIG. 6, in S634, the step of "determining, by the server, total fitnesses according to the first fitnesses and the second fitnesses" specifically includes:
S650: determining, by the server, the maximum fitness by comparing all the total fitnesses;
S651: judging whether the maximum fitness is greater than a preset fitness; if so, performing S652; and if not, performing S653;
S652: judging that the current clothing is matched reasonably, and sending, by the server, the judgment result to the household device, such that the household device displays "the current clothing matched reasonably"; and
S653: judging that the current clothing is not matched reasonably, and recommending, by the server, a target matching scheme according to the first subject image, the clothing matching database and the clothing private database.

In S650 to S653, for example, the preset fitness is 0.8, and the total fitnesses calculated in S649 are 0.86 and 0.74 respectively. 0.86 is compared with 0.74. 0.86 is determined as the maximum fitness since 0.86 is greater than 0.74. Further, 0.86 is compared with 0.8. 0.86 is greater than 0.8, i.e., greater than the preset fitness, indicating that the user has matched a set of clothing very reasonably. The server sends the judgment result to the household device, such that the household device displays "the current clothing matched reasonably". As a result, the user can be clear about the current matching result, thereby improving the user experience.

For another example, the preset fitness is 0.8, and the total fitnesses calculated in S649 are 0.61 and 0.49 respectively. 0.61 is compared with 0.49. 0.61 is determined as the maximum fitness since 0.61 is greater than 0.49. Further, 0.61 is compared with 0.8. 0.61 is less than 0.8, i.e., less than the preset fitness, indicating that the user has no reasonable matching of a set of clothing. The server recommends a target matching scheme according to the first subject image, the clothing matching database and the clothing private database, which provides the user with a better clothing matching scheme, thereby meeting the user's needs.

It should be noted that the first cosine distance, the second cosine distance, the first fitnesses, the second fitnesses, the total fitnesses, the maximum fitness, and the preset fitness listed above are only illustrative, but not restrictive. In practical applications, those skilled in the art can calculate cosine distances and fitnesses according to actual clothing pictures and flexibly adjust the preset fitness according to actual accuracy requirements.

It should also be noted that, in the above process, the execution sequence and mode of S631 and S632 are not limited to the sequence and mode listed above. S632 may be executed first, followed by S631; or S631 and S632 may be executed simultaneously. The execution sequence and mode of S641 and S644 are not limited to the sequence and mode listed above. S644 may be executed first, followed by S641; or S641 and S644 may also be executed simultaneously, which may not be limited in the present disclosure. S652 and S653 are not performed successively but in parallel, and are merely related to a judgment result indicating whether the maximum fitness is greater than the preset fitness. Corresponding steps can be executed according to different judgment results.

Next referring to FIG. 7, in S624 and S653, the step of "recommending, by the server, a target matching scheme according to the first subject image, the clothing matching database and the clothing private database" specifically includes:
S661: matching, by the server, a plurality of alternative clothing matching schemes from the clothing matching database according to a color of the current clothing and a preset method;
S662: calculating, by the server, a third similarity between an alternative clothing image corresponding to each of the alternative clothing matching schemes and a self-owned clothing image of each user that is stored in the clothing private database, the third similarity being expressed by a third cosine distance or a third Euclidean distance;
S663: judging whether the third similarity is greater than a first preset similarity; if so, performing S664; and if not, performing S665, the first preset similarity being expressed by a first preset cosine distance or a first preset Euclidean distance;
S664: determining, by the server, the alternative clothing matching scheme corresponding to the alternative clothing image as the target matching scheme, and sending the target matching scheme to the household device, such that the household device displays the target matching scheme; and
S665: not determining the alternative clothing matching scheme corresponding to the alternative clothing image as the target matching scheme.

In S661, with respect to S653, the color of the current clothing, the top color and the bottom color that have been acquired in S641 can be called directly, without being acquired again; and with respect to S624, the server calls the object detection model to identify the first subject image, so as to identify the color of the current clothing, e.g., the top color or the bottom color. The specific identification method may refer to the description in S641, and will not be repeated herein. The following is further described by taking the current clothing, which is a top, needing to be matched with a bottom as an example.

Further, the preset method corresponds to the above preset rules. The preset method is that the cool colors are matched with the cool colors, the warm colors are matched with the warm colors, and the intermediate colors may be matched with the cool colors, the warm colors and the intermediate colors. For example, a cyan top may be matched with a blue, purple, green, or gray bottom, and there is a total of two bottoms that accord with this color match in the clothing matching database.

In S662, the server calls the deep learning model to respectively extract fifth vector matrices of two bottoms that accord with this color match from the clothing matching database and sixth vector matrices of all (e.g., two) bottoms stored in the clothing private database, and calculates third similarities between the extracted two fifth vector matrices and two sixth vector matrices, respectively. Third cosine distances are used to represent the third similarities. For example, the third cosine distances between the two fifth vector matrices and the two sixth vector matrices are 0.9, 0.8, 0.7, and 0.3, respectively.

In S664 and S665, for example, the first preset cosine distance is 0.75, and the third cosine distances calculated in S653 are 0.9, 0.8, 0.7 and 0.3 respectively. 0.9, 0.8, 0.7 and 0.3 are compared with 0.75, respectively. 0.9 is greater than 0.75, and 0.8 is greater than 0.75, both of which are greater than the first preset cosine distance, indicating that the bottoms, corresponding to the third cosine distances of 0.9 and 0.8 respectively, stored in the clothing private database are well matched with the current clothing (i.e., the top to be matched), and the bottoms, corresponding to the third cosine distances of 0.9 and 0.8 respectively, stored in the clothing private database are determined as the target matching scheme, that is, the alternative clothing matching scheme corresponding to the alternative clothing image is determined as the target matching scheme. The server sends the target matching scheme to the household device such as a dressing mirror or a care machine, such that the dressing mirror or the care machine displays the target matching scheme.

Further, 0.7 is less than 0.75, and 0.3 is less than 0.75, both of which are less than the first preset cosine distance, indicating that the bottoms, corresponding to the third cosine distances of 0.7 and 0.3 respectively, stored in the clothing private database are not completely matched with the current clothing (i.e., the top to be matched), and the bottoms, corresponding to the third cosine distance of 0.3, stored in the clothing private database are not determined as the target matching scheme, that is, the alternative clothing matching scheme corresponding to the alternative clothing image is not determined as the target matching scheme.

It should be noted that the third cosine distances and the first preset cosine distance listed above are only illustrative, but not restrictive. In practical applications, those skilled in the art can calculate the third cosine distances according to actual clothing pictures, and flexibly adjust the first preset cosine distance according to actual accuracy requirements.

It should also be noted that, in the above process, S664 and S665 are not performed successively but in parallel, and are merely related to a judgment result indicating whether the third similarities are greater than the first preset similarity. Corresponding steps can be executed according to different judgment results.

Next referring to FIG. 8, the server further has a clothing image database. In S612, the step of "recommending, by the server, a washing and care procedure according to the current clothing image" further includes:
S671: obtaining a second subject image of the current clothing by preprocessing the current clothing image by the server;
S672: determining, by the server, attribute information of the current clothing according to the second subject image;
S673: comparing, by the server, the second subject image with historical clothing images stored in the clothing image database;
S674: judging, by the server, whether the current clothing is one of historical clothing according to the comparison result; if so, performing S675; and if not, performing S676;
S675: determining, by the server, the washing and care procedure according to the attribute information and historical washing data of the current clothing if the current clothing is one of historical washed clothing, and sending the washing and care procedure to the household device; and
S676: determining, by the server, a washing and care procedure according to the attribute information if the current clothing is not one of the historical washed clothing, and sending the washing and care procedure to the household device.

In S671, the server calls the object detection model to preprocess the current clothing image, so as to obtain a second subject image of the current clothing. The specific preprocessing method may refer to the description in S621, and will not be repeated herein.

In S672, the server calls the object detection model to identify the second subject image, so as to identify the attribute information (e.g., colors, types and materials, etc.) of the current clothing. The object detection model may identify the second subject image using a FCOS algorithm, a Faster R-CNN algorithm, a SPPNet algorithm, an SSD algorithm, a YOLO algorithm, etc., so as to identify attribute information such as colors, types and materials of the current clothing. Regardless of any algorithm adopted by the object detection model, the specific method of identifying the second subject image corresponding to any algorithm shall not constitute any limitation to the present disclosure.

In S673, the server calls the deep learning model to compare the second subject image with the historical clothing image, and calculate a fourth similarity between the second subject image and each historical clothing image, the fourth similarity being expressed by a fourth cosine distance, or a fourth Euclidean distance. Assuming that there is a total of three historical clothing images, the deep learning model extracts a seventh vector matrix of the second subject image and eighth vector matrices of the three historical clothing images, and calculates fourth similarities between the extracted seventh vector matrix and three eighth vector matrices respectively. Fourth cosine distances are used to represent the fourth similarities. For example, the fourth cosine distances between the seventh vector matrix and the three eighth vector matrices are 0.9, 0.6, and 0.3, respectively; or the fourth cosine distances between the seventh vector matrix and the three eighth vector matrices are 0.7, 0.4, and 0.1, respectively.

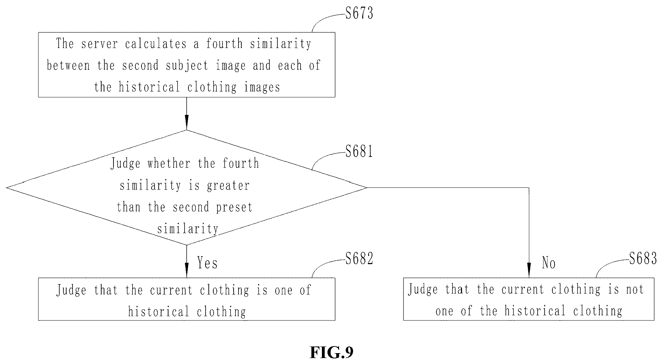

Next referring to FIG. 9, in S674, the step of "determining, by the server, whether the current clothing is one of historical clothing according to the comparison result" specifically includes:
S681: judging whether the fourth similarity is greater than a second preset similarity; if so, perform S682; and if not, perform S683;
S682: judging that the current clothing is one of the historical clothing; and
S683: judging that the current clothing is not one of the historical clothing.

The second preset similarity is expressed by a second preset cosine distance, or a second preset Euclidean distance.

In S682, if the fourth similarity is greater than the second preset similarity, e.g., the second preset cosine distance is 0.8, and the fourth cosine distances calculated in S673 are 0.9, 0.6 and 0.3 respectively. 0.9, 0.6 and 0.3 are compared with 0.8, respectively. 0.9 is greater than 0.8, i.e., greater than a preset cosine distance, indicating that this clothing has a very high similarity to one of the three historical clothing. Accordingly, it may be judged that the current clothing is one of the historical clothing, that is, the current clothing has already been washed, and historical washing data of this clothing is stored in the database.

Further, in S675, since the current clothing is one of the historical washed clothing, it means that this clothing has been washed, and historical washing data of this clothing is stored in a database. In order to accurately determine a washing and care procedure, the server determines the washing and care procedure according to the attribute information and the historical washing data of the current clothing, which not only considers historical washing informations of the clothing, but also considers the attributes of the clothing, so that the recommended washing and care procedure is more reasonable and accurate, and the clothing can be cleaned and prevented from being damaged to improve a washing and care effect of the clothing and better meet the user's needs, thereby improving the user experience.

In S683, if the fourth similarity is less than or equal to the second preset similarity, e.g., the second preset cosine distance is 0.8, and the fourth cosine distances calculated in S673 are 0.7, 0.4 and 0.1, respectively. 0.7, 0.4 and 0.1 are compared with 0.8, respectively, and are all less than 0.8, i.e., less than the preset cosine distance, indicating that this clothing has a very low similarity to any one of the three historical clothing, and the current clothing and any one of the three historical clothing compared with the current clothing are not the same clothing. Accordingly, it is judged that the current clothing is not one of the historical clothing, and historical washing data of this clothing is not stored in the database.

Further, in S676, since the current clothing is not one of the historical washed clothing, it means that this clothing has not been washed yet, and the attribute information such as colors, materials and types of this clothing are not stored in the clothing image database. The server determines a washing and care procedure according to the attribute information such as colors, materials and types. The recommended washing and care procedure considers the attributes such as colors, materials and types of the clothing, such that the recommended washing and care procedure is more reasonable and accurate, and the clothing can be washed more cleanly and completely. The washing and care procedure is then sent to the washing machine, such that the washing machine can prevent damages to the clothing more effectively to improve the washing and care effect of the clothing and better meet the user's needs, thereby improving the user experience.

Furthermore, the server stores the identified attribute information such as colors, materials and types in the clothing image database, and calls the attribute information such as the colors, materials and types of the clothing directly while this clothing is washed again, without being identified again.

In addition, after determined, the washing and care procedure is sent to a household device such as the washing machine, such that the washing machine can wash the clothing more cleanly and thoroughly based on the recommended washing and care procedure and can prevent damages to the clothing more effectively to improve the washing and care effect of the clothing and better meet the user's needs, thereby improving the user experience.

It should be noted that the fourth cosine distances and the second cosine distance listed above are only illustrative, but not restrictive. In practical applications, those skilled in the art can calculate fourth cosine distances according to actual clothing pictures, and flexibly adjust the second preset cosine distance according to actual accuracy requirements.

It should also be noted that, in the above process, S675 and S676 are not performed successively but in parallel, and are merely related to a judgment result indicating whether the current clothing is one of the historical clothing. Corresponding steps can be executed according to different judgment results. S682 and S683 are not performed successively but in parallel, and are merely related to a judgment result indicating whether the fourth similarity is greater than the second preset similarity. Corresponding steps can be executed according to different judgement results.

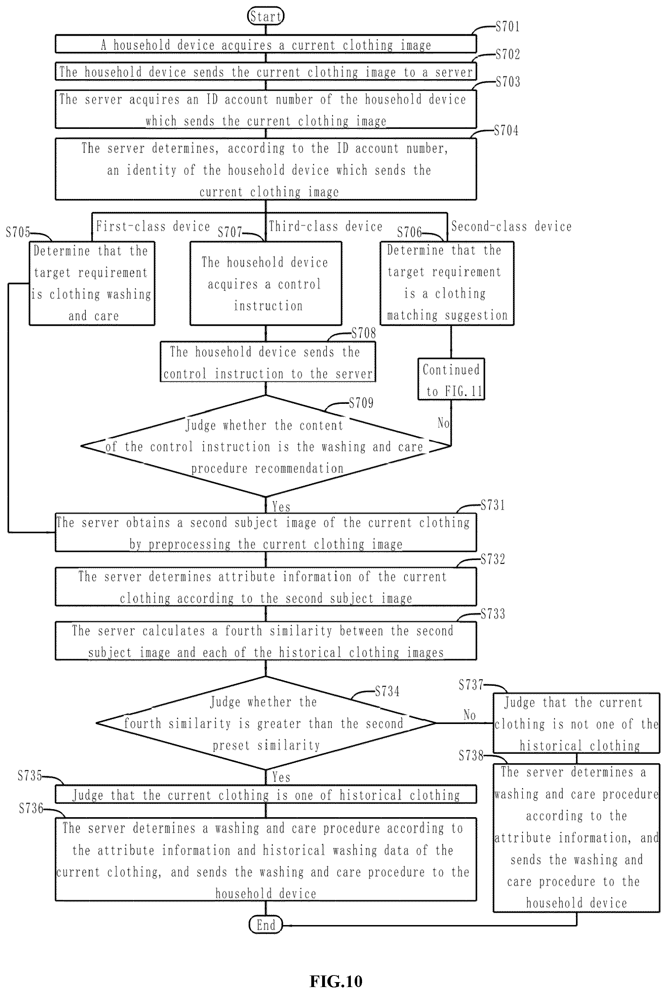

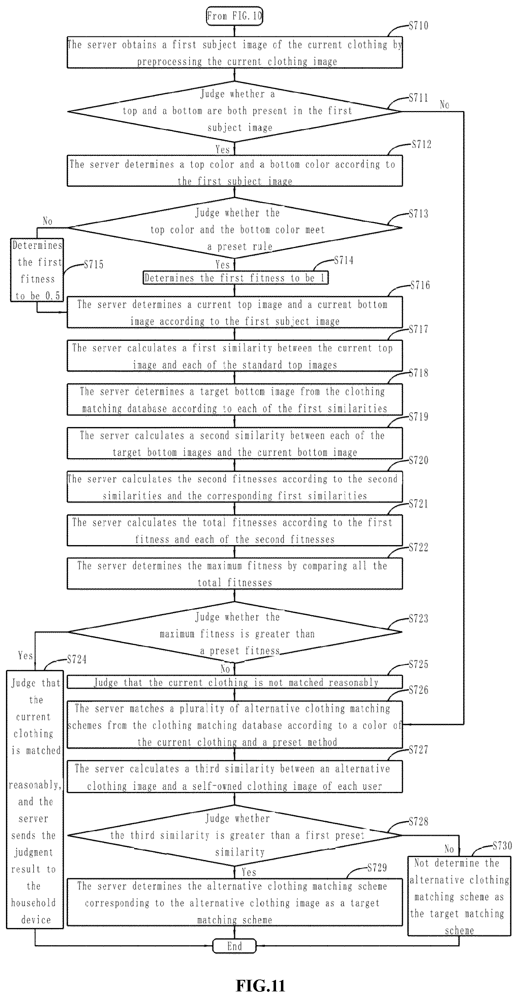

Hereinafter referring to FIG. 10 and FIG. 11, a possible control process of the present disclosure is introduced. FIG. 10 is a logical diagram I of the control method according to the present disclosure; and FIG. 11 is a logical diagram II of the control method according to the present disclosure.

As shown in FIG. 10 and FIG. 11, a possible complete process of the control method according to the present disclosure includes:
S701: acquiring, by the household device, a current clothing image;
S702: sending, by the household device, the current clothing image to a server;
S703: acquiring, by the server, an ID account number of the household device which sends the current clothing image;
S704: determining, by the server, an identity of the household device which sends the current clothing image, according to the ID account number;
   performing S705 if the ID account number of the household device is an ID account number of a first-class device;
   performing S706 if the ID account number of the household device is an ID account number of a second-class device;
   performing S707 if the ID account number of the household device is an ID account number of a third-class device;
S705: determining the target requirement to be clothing washing and care; and performing S731 after S705;
S706: determining the target requirement to be a clothing matching suggestion; and performing S710 after S706;
S707: acquiring, by the household device, a control instruction;
S708: sending, by the household device, the control instruction to the server;
S709: judging, by the server, whether the content of the control instruction is a washing and care procedure recommendation; if so, performing S710; and if not, performing S731;
S710: obtaining, by the server, a first subject image of current clothing by preprocessing the current clothing image;
S711: judging, by the server, whether a top and a bottom are both present in the first subject image; if so, perform S712; if not, perform S726;
S712: determining, by the server, a top color and a bottom color, i.e., a color of the current clothing, according to the first subject image;
S713: judging whether the top color and the bottom color meet a preset rule; if so, performing S714; and if not, performing S715;
S714: determining a first fitness to be 1;
S715: determining the first fitness to be 0.5;
   performing S716 after S714 and S715;
S716: determining, by the server, a current top image and a current bottom image according to the first subject image;
S717: calculating, by the server, a first similarity between the current top image and each standard top image stored in the clothing matching database;
S718: determining, by the server, a target bottom image from the clothing matching database respectively according to each first similarity;
S719: calculating, by the server, a second similarity between each of the target bottom images and the current bottom image;
S720: calculating, by the server, second fitnesses according to each of the second similarities and the corresponding first similarity;
S721: calculating, by the server, total fitnesses according to the first fitness and each of the second fitnesses, respectively.
S722: determining, by the server, the maximum fitness by comparing all the total fitnesses;
S723: judging whether the maximum fitness is greater than a preset fitness; if so, performing S724; and if not, performing S725;
S724: judging that the current clothing is matched reasonably, and sending, by the server, the judgment result to the household device, such that the household device displays "the current clothing matched reasonably"; and
S725: judging that the current clothing is not matched reasonably; and performing S726 after S725;
S726: matching, by the server, a plurality of alternative clothing matching schemes from the clothing matching database according to a color of the current clothing and a preset method;
S727: calculating, by the server, a third similarity between an alternative clothing image corresponding to each of the alternative clothing matching schemes and a self-owned clothing image of each user that is stored in the clothing private database;
S728: judging whether the third similarity is greater than a first preset similarity; if so, performing S729; and if not, performing S730;
S729: determining, by the server, the alternative clothing matching scheme corresponding to the alternative clothing image as a target matching scheme, and sending the target matching scheme to the household device, such that the household device displays the target matching scheme;
S730: not determining the alternative clothing matching scheme corresponding to the alternative clothing image as the target matching scheme;
S731: obtaining a second subject image of the current clothing by preprocessing the current clothing image by the server;
S732: determining, by the server, attribute information of the current clothing according to the second subject image, the attribute information including materials, types and colors;
S733: calculating, by the server, a fourth similarity between the second subject image and each of the historical clothing images stored in the clothing image database;
S734: judging whether the fourth similarity is greater than the second preset similarity; if so, performing S735; and if not, performing S737;
S735: judging that the current clothing is one of historical clothing;
S736: determining, by the server, a washing and care procedure according to the attribute information and historical washing data of the current clothing, and sending the washing and care procedure to the household device;
S737: judging that the current clothing is not one of the historical clothing; and
S738: determining, by the server, a washing and care procedure according to the attribute information, and sending the washing and care procedure to the household device.

It should be noted that the above embodiments are only preferred implementations of the present disclosure, and are only used to illustrate the principle of the method of the present disclosure but not intended to limit the scope of protection of the present disclosure. In practical applications, those skilled in the art may assign the above functions to be completed by different steps as needed, that is, the steps in the embodiments of the present disclosure are decomposed or combined. For example, the steps in the above embodiments may be combined into a single step or may be further split into a plurality of sub-steps, so as to complete all or part of the functions described above. Names of the steps involved in the embodiments of the present disclosure are only for the purpose of distinguishing various steps, and shall not be regarded as a limitation of the present disclosure.

So far, the technical solutions of the present disclosure have been described in conjunction with the preferred implementations shown in the accompanying drawings. However, it is readily understood by those skilled in the art that the scope of protection of the present disclosure is obviously not limited to these specific implementations.

## Claims

1. A control method for a smart home system, wherein the smart home system comprises a household device (1) and a server (2), and the household device (1) is capable of communicating with the server (2);
the control method comprises the following steps:
acquiring (S100), by the household device (1), a current clothing image;
sending (S200), by the household device (1), the current clothing image to the server (2);
acquiring (S300), by the server (2), an ID account number of the household device (1) which sends the current clothing image;
determining (S400), by the server (2), an identity of the household device (1) which sends the current clothing image, according to the ID account number;
**characterized by** determining (S500), by the server (2), a target requirement according to the identity; and
selectively recommending (S600), by the server (2), a washing and care procedure or a clothing matching scheme on the basis of the target requirement and according to the current clothing image.

2. The control method according to claim 1, wherein the step of "determining, by the server (2), a target requirement according to the identity" specifically comprises:
determining the target requirement to be clothing washing and care in response to the ID account number of the household device (1) being an ID account number of a first-class device (11); and
the step of "selectively recommending, by the server (2), a washing and care procedure or a clothing matching scheme on the basis of the target requirement and according to the current clothing image" specifically comprises:
recommending, by the server (2), a washing and care procedure according to the current clothing image in response to the target requirement being the clothing washing and care.

3. The control method according to claim 1 or 2, wherein the step of "determining, by the server (2), a target requirement according to the identity" further comprises:
determining the target requirement to be a clothing matching suggestion in response to the ID account number of the household device (1) being an ID account number of a second-class device (12); and
the step of "selectively recommending, by the server (2), a washing and care procedure or a clothing matching scheme on the basis of the target requirement and according to the current clothing image" further comprises:
recommending, by the server (2), a clothing matching scheme according to the current clothing image in response to the target requirement being the clothing matching suggestion.

4. The control method according to any one of claims 1 to 3, wherein the step of "determining, by the server (2), a target requirement according to the identity" further comprises:
acquiring, by the household device (1), a control instruction in response to the ID account number of the household device (1) being an ID account number of a third-class device (13); and
sending, by the household device (1), the control instruction to the server (2); and
the step of "selectively recommending, by the server (2), a washing and care procedure or a clothing matching scheme on the basis of the target requirement and according to the current clothing image" further comprises:
judging, by the server (2), whether the content of the control instruction is a washing and care procedure recommendation;
recommending, by the server (2), a washing and care procedure according to the current clothing image in response to the content of the control instruction being the washing and care procedure recommendation; and/or
recommending, by the server (2), a clothing matching scheme according to the current clothing image in response to the content of the control instruction being a clothing matching scheme recommendation.

5. The control method according to claim 3 or 4, wherein the server (2) has a clothing matching database and a clothing private database; and
the step of "recommending, by the server (2), a clothing matching scheme according to the current clothing image" specifically comprises:
obtaining a first subject image of current clothing by preprocessing the current clothing image by the server (2);
judging, by the server (2), whether a top and a bottom are both present in the first subject image;
judging, by the server (2), whether the current clothing is matched reasonably according to the first subject image and the clothing matching database in response to a top and a bottom being both present in the first subject image; and/or
recommending, by the server (2), a target matching scheme according to the first subject image, the clothing matching database and the clothing private database in response to a top or a bottom being present alone in the first subject image.

6. The control method according to claim 5, wherein the step of "judging, by the server (2), whether the current clothing is matched reasonably according to the first subject image and the clothing matching database" specifically comprises:
determining, by the server (2), a first fitness of the top and the bottom according to the first subject image;
determining, by the server (2), second fitnesses of the top and the bottom according to the first subject image and the clothing matching database;
determining, by the server (2), total fitnesses according to the first fitness and the second fitnesses; and
judging, by the server (2), whether the current clothing is matched reasonably according to the total fitnesses.

7. The control method according to claim 6, wherein the step of "determining, by the server (2), a first fitness of the top and the bottom according to the first subject image" specifically comprises:
determining, by the server (2), a top color and a bottom color according to the first subject image;
judging whether the top color and the bottom color meet a preset rule; and
determining the first fitness of the top color and the bottom color according to the judgment result.

8. The control method according to claim 7, wherein the step of "determining, by the server (2), second fitnesses of the top and the bottom according to the first subject image and the clothing matching database" specifically comprises:
determining, by the server (2), a current top image and a current bottom image according to the first subject image;
calculating, by the server (2), a first similarity between the current top image and each standard top image stored in the clothing matching database, or between the current bottom image and each standard bottom image stored in the clothing matching database;
determining, by the server (2), a target bottom image from the clothing matching database respectively according to each of the first similarities, or determining, by the server (2), a target top image from the clothing matching database respectively according to each of the first similarities;
calculating, by the server (2), a second similarity between each of the target bottom images and the current bottom image, or between each of the target top images and the current top image; and
calculating, by the server (2), the second fitnesses according to each of the second similarities and the corresponding first similarity.

9. The control method according to claim 8, wherein the second fitnesses are calculated according to the following method: ${F}_{2} = {D}_{1} \times {D}_{2}$ where *F₂* is the second fitness; *D₁* is the first similarity; and *D₂* is the second similarity.

10. The control method according to claim 8, wherein the step of "determining, by the server (2), total fitnesses according to the first fitness and the second fitnesses" specifically comprises:
calculating, by the server (2), the total fitnesses according to the first fitness and each of the second fitnesses, respectively.

11. The control method according to claim 10, wherein the total fitnesses are calculated according to the following method: ${F}_{0} = {F}_{1} \times {k}_{1} + {F}_{2} \times {k}_{2}$ where *F₀* is the total fitness; *F₁* is the first fitness; *F₂* is the second fitness; *k₁* is a first weight value; and *k₂* is a second weight value.

12. The control method according to claim 10, wherein the step of "judging, by the server (2), whether the current clothing is matched reasonably according to the total fitnesses" specifically comprises:
determining, by the server (2), the maximum fitness by comparing all the total fitnesses;
judging whether the maximum fitness is greater than a preset fitness;
judging that the current clothing is matched reasonably in response to the maximum fitness being greater than the preset fitness, and sending, by the server (2), the judgment result to the household device (1), such that the household device (1) displays "the current clothing matched reasonably"; and/or
judging that the current clothing is not matched reasonably in response to the maximum fitness being less than or equal to the preset fitness, and recommending, by the server (2), a target matching scheme according to the first subject image, the clothing matching database and the clothing private database.

13. The control method according to claim 12, wherein the step of "recommending, by the server (2), a target matching scheme according to the first subject image, the clothing matching database and the clothing private database" specifically comprises:
matching, by the server (2), a plurality of alternative clothing matching schemes from the clothing matching database according to a color of the current clothing and a preset method;
calculating, by the server (2), a third similarity between an alternative clothing image corresponding to each of the alternative clothing matching schemes and a self-owned clothing image of each user that is stored in the clothing private database;
judging whether the third similarity is greater than a first preset similarity;
determining, by the server (2), the alternative clothing matching scheme corresponding to the alternative clothing image as the target matching scheme in response to the third similarity being greater than the first preset similarity, and sending the target matching scheme to the household device (1), such that the household device (1) displays the target matching scheme; and/or
not determining the alternative clothing matching scheme corresponding to the alternative clothing image as the target matching scheme in response to the third similarity being less than or equal to the first preset similarity.

14. The control method according to claim 2 or 4, wherein the server (2) further has a clothing image database; and
the step of "recommending, by the server (2), a washing and care procedure according to the current clothing image" specifically comprises:
obtaining, by the server (2), a second subject image of the current clothing by preprocessing the current clothing image;
determining, by the server (2), attribute information of the current clothing according to the second subject image;
comparing, by the server (2), the second subject image with historical clothing images stored in the clothing image database;
judging, by the server (2), whether the current clothing is one of historical clothing according to the comparison results;
determining, by the server (2), a washing and care procedure according to the attribute information and historical washing data of the current clothing in response to the current clothing being one of historical washed clothing, and sending the washing and care procedure to the household device (1); and/or
determining, by the server (2), a washing and care procedure according to the attribute information in response to the current clothing being not one of the historical washed clothing, and sending the washing and care procedure to the household device (1).

15. The control method according to claim 14, wherein the step of "comparing, by the server (2), the second subject image with historical clothing images stored in the clothing image database" specifically comprises:
calculating, by the server (2), a fourth similarity between the second subject image and each of the historical clothing images; and
the step of "judging, by the server (2), whether the current clothing is one of historical clothing according to the comparison result" specifically comprises:
judging whether the fourth similarity is greater than a second preset similarity;
judging that the current clothing is one of the historical clothing in response to the fourth similarity being greater than the second preset similarity; and/or
judging that the current clothing is not one of the historical clothing in response to the fourth similarity being less than or equal to the second preset similarity.

## Patentansprüche

1. Steuerungsverfahren für ein Smart-Home-System, wobei das Smart-Home-System ein Haushaltsgerät (1) und einen Server (2) umfasst und das Haushaltsgerät (1) in der Lage ist, mit dem Server (2) zu kommunizieren;
wobei das Steuerungsverfahren die folgenden Schritte umfasst:
Erfassen (S100) eines aktuellen Kleidungsbildes durch das Haushaltsgerät (1);
Senden (S200) des aktuellen Kleidungsbildes durch das Haushaltsgerät (1) an den Server (2);
Erfassen (S300) durch den Server (2) einer ID-Kontonummer des Haushaltsgeräts (1), das das aktuelle Kleidungsbild sendet;
Bestimmen (S400) durch den Server (2) einer Identität des Haushaltsgeräts (1),
das das aktuelle Kleidungsbild sendet, gemäß der ID-Kontonummer;
**gekennzeichnet durch** Bestimmen (S500) durch den Server (2) einer Zielanforderung gemäß der Identität; und
selektives Empfehlen (S600) durch den Server (2) einer Wasch- und Pflegemethode oder eines Kleidungskombinationsschemas basierend auf der Zielanforderung und gemäß dem aktuellen Kleidungsbild.

2. Steuerungsverfahren nach Anspruch 1, wobei der Schritt "Bestimmen durch den Server (2) einer Zielanforderung gemäß der Identität" insbesondere Folgendes umfasst: Bestimmen der Zielanforderung als Kleiderwäsche und -pflege, wenn die ID-Kontonummer des Haushaltsgeräts (1) eine ID-Kontonummer eines Geräts erster Klasse (11) ist; und
der Schritt "selektives Empfehlen durch den Server (2) einer Wasch- und Pflegemethode oder eines Kleidungskombinationsschemas basierend auf der Zielanforderung und gemäß dem aktuellen Kleidungsbild" insbesondere Folgendes umfasst:
Empfehlen durch den Server (2) einer Wasch- und Pflegemethode gemäß dem aktuellen Kleidungsbild als Reaktion darauf, dass die Zielanforderung die Kleiderwäsche und -pflege ist.

3. Steuerungsverfahren nach Anspruch 1 oder 2, wobei der Schritt "Bestimmen durch den Server (2) einer Zielanforderung gemäß der Identität" ferner Folgendes umfasst:
Bestimmen der Zielanforderung als Vorschlag für eine Kleidungskombination als Reaktion darauf, dass die ID-Kontonummer des Haushaltsgeräts (1) eine ID-Kontonummer eines Geräts der zweiten Klasse (12) ist; und
wobei der Schritt "selektives Empfehlen durch den Server (2) einer Wasch- und Pflegemethode oder eines Kleidungskombinationsschemas basierend auf der Zielanforderung und gemäß dem aktuellen Kleidungsbild" ferner Folgendes umfasst:
Empfehlen durch den Server (2) eines Kleidungskombinationsschemas gemäß dem aktuellen Kleidungsbild als Reaktion darauf, dass die Zielanforderung der Vorschlag für eine Kleidungskombination ist.

4. Steuerungsverfahren nach einem der Ansprüche 1 bis 3, wobei der Schritt "Bestimmen durch den Server (2) einer Zielanforderung gemäß der Identität" ferner Folgendes umfasst:
Erfassen durch das Haushaltsgerät (1) eines Steuerbefehls als Reaktion darauf, dass die ID-Kontonummer des Haushaltsgeräts (1) eine ID-Kontonummer eines Geräts der dritten Klasse (13) ist; und
Senden durch das Haushaltsgerät (1) des Steuerbefehls an den Server (2); und
wobei der Schritt "selektives Empfehlen durch den Server (2) einer Wasch- und Pflegemethode oder eines Kleidungskombinationsschemas basierend auf der Zielanforderung und gemäß dem aktuellen Kleidungsbild" ferner Folgendes umfasst:
Beurteilen durch den Server (2), ob der Inhalt des Steuerbefehls eine Empfehlung für eine Wasch- und Behandlungsmethode ist;
Empfehlen durch den Server (2) einer Wasch- und Pflegemethode gemäß dem aktuellen Kleidungsbild als Reaktion darauf, dass der Inhalt des Steuerbefehls eine Empfehlung für eine Wasch- und Behandlungsmethode ist; und/oder
Empfehlen durch den Server (2) eines Kleidungskombinationsschemas gemäß dem aktuellen Kleidungsbild als Reaktion darauf, dass der Inhalt des Steuerbefehls eine Empfehlung für ein Kleidungskombinationsschema ist.

5. Steuerungsverfahren nach Anspruch 3 oder 4, wobei der Server (2) eine Datenbank für Kleidungskombinationen und eine private Kleidungsdatenbank aufweist; und
wobei der Schritt "Empfehlen durch den Server (2) eines Kleidungskombinationsschemas gemäß dem aktuellen Kleidungsbild" insbesondere Folgendes umfasst:
Erhalten eines ersten Motivbildes der aktuellen Kleidung durch Vorverarbeiten des aktuellen Kleidungsbildes durch den Server (2);
Beurteilen durch den Server (2), ob sowohl ein Oberteil als auch ein Unterteil in dem ersten Motivbild vorhanden sind;
Beurteilen durch den Server (2), ob die aktuelle Kleidung gemäß dem ersten Motivbild und der Datenbank für Kleidungskombinationen angemessen kombiniert ist, als Reaktion darauf, dass in dem ersten Motivbild sowohl ein Oberteil als auch ein Unterteil vorhanden sind; und/oder
Empfehlen durch den Server (2) eines Zielkombinationsschemas gemäß dem ersten Motivbild, der Datenbank für Kleidungskombinationen und der privaten Kleidungsdatenbank als Reaktion darauf, dass in dem ersten Motivbild nur ein Oberteil oder nur ein Unterteil vorhanden ist.

6. Steuerungsverfahren nach Anspruch 5, wobei der Schritt "Beurteilen durch den Server (2), ob die aktuelle Kleidung gemäß dem ersten Motivbild und der Datenbank für Kleidungskombinationen angemessen kombiniert ist" insbesondere Folgendes umfasst:
Bestimmen durch den Server (2) einer ersten Eignung des Oberteils und des Unterteils gemäß dem ersten Motivbild;
Bestimmen durch den Server (2) zweiter Eignungen des Oberteils und des Unterteils gemäß dem ersten Motivbild und der Datenbank für Kleidungskombinationen;
Bestimmen durch den Server (2) der Gesamteignungen gemäß der ersten und der zweiten Eignung; und
Beurteilen durch den Server (2), ob die aktuelle Kleidung gemäß den Gesamteignungen angemessen kombiniert ist.

7. Steuerungsverfahren nach Anspruch 6, wobei der Schritt "Bestimmen durch den Server (2) einer ersten Eignung des Oberteils und des Unterteils gemäß dem ersten Motivbild" insbesondere Folgendes umfasst:
Bestimmen durch den Server (2) einer oberen Farbe und einer unteren Farbe gemäß dem ersten Motivbild;
Beurteilen, ob die obere Farbe und die untere Farbe eine voreingestellte Regel erfüllen; und
Bestimmen der ersten Eignung der oberen Farbe und der unteren Farbe gemäß dem Beurteilungsergebnis.

8. Steuerungsverfahren nach Anspruch 7, wobei der Schritt "Bestimmen durch den Server (2) zweiter Eignungen des Oberteils und des Unterteils gemäß dem ersten Motivbild und der Datenbank für Kleidungskombinationen" insbesondere Folgendes umfasst:
Bestimmen durch den Server (2) eines aktuellen Oberteilbildes und eines aktuellen Unterteilbildes gemäß dem ersten Motivbild;
Berechnen durch den Server (2) einer ersten Ähnlichkeit zwischen dem aktuellen Oberteilbild und jedem in der Datenbank für Kleidungskombinationen gespeicherten Standardoberteilbild oder zwischen dem aktuellen Unterteilbild und jedem in der Datenbank für Kleidungskombinationen gespeicherten Standardunterteilbild;
Bestimmen durch den Server (2) eines Zielunterteilbildes aus der Datenbank für Kleidungskombinationen jeweils gemäß jeder der ersten Ähnlichkeiten oder
Bestimmen durch den Server (2) eines Zieloberteilbildes aus der Datenbank für Kleidungskombinationen jeweils gemäß jeder der ersten Ähnlichkeiten;
Berechnen durch den Server (2) einer zweiten Ähnlichkeit zwischen jedem der Zielunterteilbilder und dem aktuellen Unterteilbild oder zwischen jedem der Zieloberteilbilder und dem aktuellen Oberteilbild; und
Berechnen durch den Server (2) der zweiten Eignungen gemäß jeder der zweiten Ähnlichkeiten und der entsprechenden ersten Ähnlichkeit.

9. Steuerungsverfahren nach Anspruch 8, wobei die zweiten Eignungen nach dem folgenden Verfahren berechnet werden: ${F}_{2} = {D}_{1} \times {D}_{2}$ wobei *F₂* die zweite Eignung, *D₁* die erste Ähnlichkeit und *D₂* die zweite Ähnlichkeit ist.

10. Steuerungsverfahren nach Anspruch 8, wobei der Schritt "Bestimmen durch den Server (2) der Gesamteignungen gemäß der ersten und der zweiten Eignung" insbesondere Folgendes umfasst:
Bestimmen durch den Server (2) der Gesamteignungen gemäß der ersten Eignung und jeder der zweiten Eignungen.

11. Steuerungsverfahren nach Anspruch 10, wobei die Gesamteignungen nach dem folgenden Verfahren berechnet werden: ${F}_{0} = {F}_{1} \times {k}_{1} + {F}_{2} \times {k}_{2}$ wobei *F₀* die Gesamteignung, *F₁* die erste Eignung, *F₂* die zweite Eignung, *k₁* ein erster Gewichtswert und ein zweiter Gewichtswert ist.

12. Steuerungsverfahren nach Anspruch 10, wobei der Schritt "Beurteilen durch den Server (2), ob die aktuelle Kleidung gemäß den Gesamteignungen angemessen kombiniert ist" insbesondere Folgendes umfasst:
Bestimmen durch den Server (2) der maximalen Eignung durch Vergleichen aller Gesamteignungen;
Beurteilen, ob die maximale Eignung größer ist als eine voreingestellte Eignung;
Beurteilen, dass die aktuelle Kleidung angemessen kombiniert ist, als Reaktion darauf, dass die maximale Eignung größer als die voreingestellte Eignung ist, und Senden durch den Server (2) des Beurteilungsergebnisses an das Haushaltsgerät (1), sodass das Haushaltsgerät (1) "die aktuelle Kleidung ist angemessen kombiniert" anzeigt; und/oder
Beurteilen, dass die aktuelle Kleidung nicht angemessen kombiniert ist, als Reaktion darauf, dass die maximale Eignung kleiner oder gleich der voreingestellten Eignung ist, und Empfehlen durch den Server (2) eines Zielkombinationsschemas gemäß dem ersten Motivbild, der Datenbank für Kleidungskombinationen und der privaten Kleidungsdatenbank.

13. Steuerungsverfahren nach Anspruch 12, wobei der Schritt "Empfehlen durch den Server (2) eines Zielkombinationsschemas gemäß dem ersten Motivbild, der Datenbank für Kleidungskombinationen und der privaten Kleidungsdatenbank" insbesondere Folgendes umfasst:
Abgleichen durch den Server (2) einer Vielzahl alternativer Kleidungskombinationsschemata aus der Datenbank für Kleidungskombinationen gemäß einer Farbe der aktuellen Kleidung und einem voreingestellten Verfahren;
Berechnen durch den Server (2) einer dritten Ähnlichkeit zwischen einem alternativen Kleidungsbild, das jedem der alternativen
Kleidungskombinationsschemata entspricht, und einem eigenen Kleidungsbild jedes Nutzers, das in der privaten Kleidungsdatenbank gespeichert ist;
Beurteilen, ob die dritte Ähnlichkeit größer ist als eine erste voreingestellte Ähnlichkeit;
Bestimmen durch den Server (2) des dem alternativen Kleidungsbild entsprechenden alternativen Kleidungskombinationsschemas als Zielkombinationsschema als Reaktion darauf, dass die dritte Ähnlichkeit größer ist als die erste voreingestellte Ähnlichkeit, und Senden des Zielkombinationsschemas an das Haushaltsgerät (1), sodass das Haushaltsgerät (1) das Zielkombinationsschema anzeigt; und/oder
Nichtbestimmen des dem alternativen Kleidungsbild entsprechenden alternativen Kleidungskombinationsschemas als Zielkombinationsschema als Reaktion darauf, dass die dritte Ähnlichkeit kleiner oder gleich der ersten voreingestellten Ähnlichkeit ist.

14. Steuerungsverfahren nach Anspruch 2 oder 4, wobei der Server (2) ferner eine Kleidungsbilddatenbank aufweist; und
wobei der Schritt "Empfehlen durch den Server (2) einer Wasch- und Pflegemethode gemäß dem aktuellen Kleidungsbild" insbesondere Folgendes umfasst:
Erhalten durch den Server (2) eines zweiten Motivbildes der aktuellen Kleidung durch Vorverarbeiten des aktuellen Kleidungsbildes;
Bestimmen durch den Server (2) von Attributinformationen der aktuellen Kleidung gemäß dem zweiten Motivbild;
Vergleichen durch den Server (2) des zweiten Motivbildes mit historischen Kleidungsbildern, die in der Kleidungsbilddatenbank gespeichert sind;
Beurteilen durch den Server (2), ob es sich bei der aktuellen Kleidung um eine historische Kleidung handelt, gemäß den Vergleichsergebnissen;
Bestimmen durch den Server (2) einer Wasch- und Pflegemethode gemäß den Attributinformationen und historischen Waschdaten der aktuellen Kleidung als Reaktion darauf, dass die aktuelle Kleidung zu den historisch gewaschenen Kleidungsstücken gehört, und Senden der Wasch- und Pflegemethode an das Haushaltsgerät (1); und/oder
Bestimmen durch den Server (2) einer Wasch- und Pflegemethode gemäß den Attributinformationen als Reaktion darauf, dass das aktuelle Kleidungsstück nicht zu den historisch gewaschenen Kleidungsstücken gehört, und Senden der Waschund Pflegemethode an das Haushaltsgerät (1).

15. Steuerungsverfahren nach Anspruch 14, wobei der Schritt "Vergleichen durch den Server (2) des zweiten Motivbildes mit historischen Kleidungsbildern, die in der Kleidungsbilddatenbank gespeichert sind" insbesondere Folgendes umfasst:
Berechnen durch den Server (2) einer vierten Ähnlichkeit zwischen dem zweiten Motivbild und jedem der historischen Kleidungsbilder; und
wobei der Schritt "Beurteilen durch den Server (2), ob es sich bei der aktuellen Kleidung um eine historische Kleidung handelt, gemäß den Vergleichsergebnissen" insbesondere Folgendes umfasst:
Beurteilen, ob die vierte Ähnlichkeit größer ist als eine zweite voreingestellte Ähnlichkeit;
Beurteilen, dass es sich bei der aktuellen Kleidung um eine historische Kleidung handelt, wenn die vierte Ähnlichkeit größer ist als die zweite voreingestellte Ähnlichkeit; und/oder
Beurteilen, dass es sich bei der aktuellen Kleidung nicht um eine historische Kleidung handelt, wenn die vierte Ähnlichkeit kleiner oder gleich der zweiten voreingestellten Ähnlichkeit ist.

## Revendications

1. Procédé de commande pour un système domestique intelligent, dans lequel le système domestique intelligent comprend un dispositif ménager (1) et un serveur (2), et le dispositif ménager (1) est capable de communiquer avec le serveur (2) ;
le procédé de commande comprend les étapes suivantes :
l'acquisition (S100), par le dispositif ménager (1), d'une image de vêtement actuel ;
l'envoi (S200), par le dispositif ménager (1), de l'image de vêtement actuel au serveur (2) ;
l'acquisition (S300), par le serveur (2), d'un numéro de compte d'identification (ID) du dispositif ménager (1) qui envoie l'image de vêtement actuel ;
la détermination (S400), par le serveur (2), d'une identité du dispositif ménager (1) qui envoie l'image de vêtement actuel, en fonction du numéro de compte ID ;
**caractérisé par** la détermination (S500), par le serveur (2), d'une exigence cible en fonction de l'identité ; et
la recommandation (S600) sélective, par le serveur (2), d'une procédure de lavage et d'entretien ou d'un schéma d'assortiment de vêtements sur la base de l'exigence cible et en fonction de l'image de vêtement actuel.

2. Procédé de commande selon la revendication 1, dans lequel l'étape de « détermination, par le serveur (2), d'une exigence cible en fonction de l'identité » comprend spécifiquement : la détermination de l'exigence cible comme étant le lavage et l'entretien de vêtement en réponse au numéro de compte ID du dispositif ménager (1) qui est un numéro de compte ID d'un dispositif de première catégorie (11) ; et
l'étape de « recommandation sélective, par le serveur (2), d'une procédure de lavage et d'entretien ou d'un schéma d'assortiment de vêtements sur la base de l'exigence cible et en fonction de l'image de vêtement actuel » comprend spécifiquement :
la recommandation, par le serveur (2), d'une procédure de lavage et d'entretien en fonction de l'image de vêtement actuel en réponse à l'exigence cible concernant le lavage et l'entretien de vêtement.

3. Procédé de commande selon la revendication 1 ou 2, dans lequel l'étape de « détermination, par le serveur (2), d'une exigence cible en fonction de l'identité » comprend en outre :
la détermination du fait que l'exigence cible est une suggestion d'assortiment de vêtements en réponse au fait que le numéro de compte ID du dispositif ménager (1) est un numéro de compte ID d'un dispositif de deuxième catégorie (12) ; et
l'étape de « recommandation sélective, par le serveur (2), d'une procédure de lavage et d'entretien ou d'un schéma d'assortiment de vêtements sur la base de l'exigence cible et en fonction de l'image de vêtement actuel » comprend en outre : la recommandation, par le serveur (2), d'un schéma d'assortiment de vêtements en fonction de l'image de vêtement actuel en réponse au fait que l'exigence cible est la suggestion d'assortiment de vêtements.

4. Procédé de commande selon l'une quelconque des revendications 1 à 3, dans lequel l'étape de « détermination, par le serveur (2), d'une exigence cible en fonction de l'identité » comprend en outre :
l'acquisition, par le dispositif ménager (1), d'une instruction de commande en réponse au fait que le numéro de compte ID du dispositif ménager (1) est un numéro de compte ID d'un dispositif de troisième catégorie (13) ; et
l'envoi, par le dispositif ménager (1), de l'instruction de commande au serveur (2) ; et
l'étape de « recommandation sélective, par le serveur (2), d'une procédure de lavage et d'entretien ou d'un schéma d'assortiment de vêtements sur la base de l'exigence cible et en fonction de l'image de vêtement actuel » comprend en outre :
l'estimation, par le serveur (2), du fait que le contenu de l'instruction de commande est ou non une recommandation de procédure de lavage et d'entretien ;
la recommandation, par le serveur (2), d'une procédure de lavage et d'entretien en fonction de l'image de vêtement actuel en réponse au fait que le contenu de l'instruction de commande est la recommandation de procédure de lavage et d'entretien ; et/ou
la recommandation, par le serveur (2), d'un schéma d'assortiment de vêtements en fonction de l'image de vêtement actuel en réponse au fait que le contenu de l'instruction de commande est une recommandation de schéma d'assortiment de vêtements.

5. Procédé de commande selon la revendication 3 ou 4, dans lequel le serveur (2) dispose d'une base de données d'assortiment de vêtements et d'une base de données privée de vêtements ; et
l'étape de « recommandation, par le serveur (2), d'un schéma d'assortiment de vêtements en fonction de l'image de vêtement actuel » comprend spécifiquement :
l'obtention d'une première image de sujet de vêtement actuel par prétraitement de l'image de vêtement actuel par le serveur (2) ;
l'estimation, par le serveur (2), du fait qu'un haut et un bas sont ou non tous deux présents dans la première image de sujet ;
l'estimation, par le serveur (2), du fait que les vêtements actuels sont ou non assortis raisonnablement selon la première image de sujet et la base de données d'assortiment de vêtements en réponse à la présence d'un haut et d'un bas dans la première image de sujet ; et/ou
la recommandation, par le serveur (2), d'un schéma d'assortiment cible en fonction de la première image de sujet, de la base de données d'assortiment de vêtements et de la base de données privée de vêtements en réponse à la présence d'un haut ou d'un bas seul dans la première image de sujet.

6. Procédé de commande selon la revendication 5, dans lequel l'étape d'« estimation, par le serveur (2), du fait que les vêtements actuels sont ou non assortis raisonnablement selon la première image de sujet et la base de données d'assortiment de vêtements » comprend spécifiquement :
la détermination, par le serveur (2), d'une première adéquation du haut et du bas en fonction de la première image de sujet ;
la détermination, par le serveur (2), de secondes adéquations du haut et du bas en fonction de la première image de sujet et de la base de données d'assortiment de vêtements ;
la détermination, par le serveur (2), d'adéquations totales en fonction de la première adéquation et des secondes adéquations ; et
l'estimation, par le serveur (2), du fait que les vêtements actuels sont ou non raisonnablement assortis en fonction des adéquations totales.

7. Procédé de commande selon la revendication 6, dans lequel l'étape de « détermination, par le serveur (2), d'une première adéquation du haut et du bas en fonction de la première image de sujet » comprend spécifiquement :
la détermination, par le serveur (2), d'une couleur de haut et d'une couleur de bas en fonction de la première image de sujet ;
l'estimation du fait que la couleur de haut et la couleur de bas répondent ou non à une règle prédéfinie ; et
la détermination de la première adéquation de la couleur de haut et de la couleur de bas en fonction du résultat de l'estimation.

8. Procédé de commande selon la revendication 7, dans lequel l'étape de « détermination, par le serveur (2), de secondes adéquations du haut et du bas en fonction de la première image de sujet et de la base de données d'assortiment de vêtements » comprend spécifiquement :
la détermination, par le serveur (2), d'une image de haut actuel et d'une image de bas actuel en fonction de la première image de sujet ;
le calcul, par le serveur (2), d'une première similarité entre l'image de haut actuel et chaque image de haut standard stockée dans la base de données d'assortiment de vêtements, ou entre l'image de bas actuel et chaque image de bas standard stockée dans la base de données d'assortiment de vêtements ;
la détermination, par le serveur (2), d'une image de bas cible à partir de la base de données d'assortiment de vêtements, respectivement en fonction de chacune des premières similarités, ou la détermination, par le serveur (2), d'une image de haut cible à partir de la base de données d'assortiment de vêtements, respectivement en fonction de chacune des premières similarités ;
le calcul, par le serveur (2), d'une deuxième similarité entre chacune des images de bas cible et l'image de bas actuel, ou entre chacune des images de haut cible et l'image de haut actuel ; et
le calcul, par le serveur (2), des secondes adéquations en fonction de chacune des deuxièmes similarités et de la première similarité correspondante.

9. Procédé de commande selon la revendication 8, dans lequel les secondes adéquations sont calculées selon le procédé suivant : ${F}_{2} = {D}_{1} \times {D}_{2}$ où *F₂* est la seconde adéquation ; *D₁* est la première similarité ; et *D₂* est la deuxième similarité.

10. Procédé de commande selon la revendication 8, dans lequel l'étape de « détermination, par le serveur (2), d'adéquations totales en fonction de la première adéquation et de la seconde adéquation » comprend spécifiquement :
le calcul, par le serveur (2), des adéquations totales en fonction de la première adéquation et de chacune des secondes adéquations, respectivement.

11. Procédé de commande selon la revendication 10, dans lequel les adéquations totales sont calculées selon le procédé suivant : ${F}_{0} = {F}_{1} \times {k}_{1} + {F}_{2} \times {k}_{2}$ où *F₀* est l'adéquation totale ; *F₁* est la première adéquation ; *F₂* est la seconde adéquation ; *k₁* est une première valeur de pondération ; et *k₂* est une seconde valeur de pondération.

12. Procédé de commande selon la revendication 10, dans lequel l'étape d'« estimation, par le serveur (2), du fait que les vêtements actuels sont ou non assortis raisonnablement en fonction des adéquations totales » comprend spécifiquement :
la détermination, par le serveur (2), de l'adéquation maximale en comparant toutes les adéquations totales ;
l'estimation du fait que l'adéquation maximale est supérieure à une adéquation prédéfinie ;
l'estimation du fait que les vêtements actuels sont ou non raisonnablement assortis en réponse au fait que l'adéquation maximale est supérieure à l'adéquation prédéfinie, et l'envoi, par le serveur (2), du résultat de l'estimation au dispositif ménager (1), de sorte que le dispositif ménager (1) affiche « les vêtements actuels sont raisonnablement assortis » ; et/ou
l'estimation du fait que les vêtements actuels ne sont pas assortis raisonnablement en réponse au fait que l'adéquation maximale est inférieure ou égale à l'adéquation prédéfinie, et la recommandation, par le serveur (2), d'un schéma d'assortiment cible en fonction de la première image de sujet, de la base de données d'assortiment de vêtements et de la base de données privée de vêtements.

13. Procédé de commande selon la revendication 12, dans lequel l'étape de « recommandation, par le serveur (2), d'un schéma d'assortiment cible en fonction de la première image de sujet, de la base de données d'assortiment de vêtements et de la base de données privée de vêtements » comprend spécifiquement :
l'assortiment, par le serveur (2), d'une pluralité de schémas d'assortiment de vêtements alternatifs à partir de la base de données d'assortiment de vêtements en fonction d'une couleur du vêtement actuel et d'un procédé prédéfini ;
le calcul, par le serveur (2), d'une troisième similarité entre une image de vêtement alternatif correspondant à chacun des schémas d'assortiment de vêtements alternatifs et une image de vêtement appartenant à chaque utilisateur et stockée dans la base de données privée de vêtements ;
l'estimation du fait que la troisième similarité est ou non supérieure à une première similarité prédéfinie ;
la détermination, par le serveur (2), du schéma d'assortiment de vêtements alternatifs correspondant à l'image de vêtement alternatif en tant que schéma d'assortiment cible en réponse au fait que la troisième similarité est supérieure à la première similarité prédéfinie, et l'envoi du schéma d'assortiment cible au dispositif ménager (1), de sorte que le dispositif ménager (1) affiche le schéma d'assortiment cible ; et/ou
la non-détermination du schéma d'assortiment de vêtements alternatifs correspondant à l'image de vêtement alternatif en tant que schéma d'assortiment cible en réponse au fait que la troisième similarité est inférieure ou égale à la première similarité prédéfinie.

14. Procédé de commande selon la revendication 2 ou 4, dans lequel le serveur (2) possède en outre une base de données d'images de vêtements ; et
l'étape de « recommandation, par le serveur (2), d'une procédure de lavage et d'entretien en fonction de l'image de vêtement actuel » comprend spécifiquement :
l'obtention, par le serveur (2), d'une seconde image de sujet du vêtement actuel par prétraitement de l'image de vêtement actuel ;
la détermination, par le serveur (2), d'informations d'attributs du vêtement actuel en fonction de la seconde image de sujet ;
la comparaison, par le serveur (2), de la seconde image de sujet avec des images de vêtements antérieurs stockées dans la base de données d'images de vêtements ;
l'estimation, par le serveur (2), du fait que le vêtement actuel est l'un des vêtements antérieurs en fonction des résultats de la comparaison ;
la détermination, par le serveur (2), d'une procédure de lavage et d'entretien en fonction des informations d'attributs et des données de lavage antérieures du vêtement actuel, en réponse au fait que le vêtement actuel fait partie des vêtements antérieurs lavés, et l'envoi de la procédure de lavage et d'entretien au dispositif ménager (1) ; et/ou
la détermination, par le serveur (2), d'une procédure de lavage et d'entretien en fonction des informations d'attribut en réponse au fait que le vêtement actuel ne fait pas partie des vêtements antérieurs lavés, et l'envoi de la procédure de lavage et d'entretien au dispositif ménager (1).

15. Procédé de commande selon la revendication 14, dans lequel l'étape de « comparaison, par le serveur (2), de la seconde image de sujet avec des images de vêtements antérieurs stockées dans la base de données d'images de vêtements » comprend spécifiquement :
le calcul, par le serveur (2), d'une quatrième similarité entre la seconde image de sujet et chacune des images de vêtements antérieurs ; et
l'étape d'« estimation, par le serveur (2), du fait que le vêtement actuel est ou non un vêtement antérieur en fonction du résultat de la comparaison » comprend spécifiquement :
l'estimation du fait que la quatrième similarité est ou non supérieure à une deuxième similarité prédéfinie ;
l'estimation du fait que le vêtement actuel est l'un des vêtements antérieurs en réponse au fait que la quatrième similarité est supérieure à la deuxième similarité prédéfinie ; et/ou
l'estimation du fait que le vêtement actuel n'est pas l'un des vêtements antérieurs lorsque la quatrième similarité est inférieure ou égale à la deuxième similarité prédéfinie.
